(19) Europäisches Patentamt
European Patent Office
Office européen des brevets

(11) **EP 3 061 593 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(21) Anmeldenummer: **16156936.3**

(22) Anmeldetag: **23.02.2016**

(51) Int Cl.:
*B29C 70/30* (2006.01)    *B60B 5/02* (2006.01)
*B60B 1/06* (2006.01)    *B60B 21/02* (2006.01)
*B32B 37/14* (2006.01)    *B29C 70/46* (2006.01)

(54) **FAHRRADLAUFRAD UND VERFAHREN ZU DESSEN HERSTELLUNG**

BICYCLE WHEEL AND METHOD FOR ITS MANUFACTURE

ROUE DE ROULEMENT DE VELO ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2015 CH 2462015**
**24.02.2015 DE 202015001363 U**

(43) Veröffentlichungstag der Anmeldung:
**31.08.2016 Patentblatt 2016/35**

(73) Patentinhaber: **Scott Sports S.A.**
**1762 Givisiez (CH)**

(72) Erfinder: **HABERMACHER, Timothy**
**8046 Zürich (CH)**

(74) Vertreter: **Klunker IP**
**Patentanwälte PartG mbB**
**Destouchesstraße 68**
**80796 München (DE)**

(56) Entgegenhaltungen:
DE-A1-102008 007 722    GB-A- 978 913
US-A- 5 104 199

EP 3 061 593 B1

**Beschreibung**

TECHNISCHES GEBIET

Die vorliegende Erfindung bezieht sich auf ein Fahrradlaufrad gemäss dem Oberbegriff des Anspruchs 1. Des Weiteren bezieht sich die vorliegende Erfindung auf ein Verfahren zur Herstellung eines Fahrradlaufrads.

STAND DER TECHNIK

In den letzten Jahren wurden zahlreiche Entwicklungen im Bereich Fahrradlaufräder, insbesondere für den Radrennsport hervorgebracht. In diesem Sportbereich spielen Gewicht, Steifigkeit des Materials und die Aerodynamik, welche insbesondere auf die Felgengeometrie zurückzuführen ist, eine wesentliche Rolle. In seinen Grundelementen besteht ein Laufrad aus Nabe, den Speichen und der Felge. Dies gilt ebenfalls für Laufräder aus Faserverbundwerkstoff, insbesondere aus Carbon. Grundsätzlich wird im Bereich der Fahrradlaufräder, welche aus Faserverbundwerkstoff hergestellt sind, zwischen Scheibenrädern, Rädern mit massiven Speichen und Rädern mit vorgespannten Speichen unterschieden. Gemäss der vorliegenden Erfindung werden Laufräder mit vorgespannten Speichen betrachtet, wobei sowohl die Speichen als auch die Felgen aus einem Faserverbundwerkstoff, vorzugsweise Carbon gefertigt sind.

Die EP 2030765 A2 beschreibt ein Verfahren zur Herstellung eines Laufrades für Fahrräder, wobei Felge und Speiche aus einem ausgehärteten Faserverbundstoff, beispielsweise Carbon bestehen und es sich um ein Laufrad mit vorgespannten Speichen handelt. Wie der EP 2030765 A2 zu entnehmen ist, erfolgt die Herstellung der Felge und die anschliessende Befestigung der Speichen in zwei separaten Verfahren. Bereits für die Produktion der Felge ist eine Mehrzahl von Arbeitsschritten erforderlich. Beginnend mit der Herstellung des Felgenaussenprofils, gefolgt vom Bereitstellen eines Kunststoffformelements, welches mit dem Felgenaussenprofil verbunden und mit einer Decklage überzogen wird. Erst in einem zweiten, vom ersten Verfahren unabhängigen Prozess werden die einzelnen Speichen, welche gleich wie die Felge aus einem Faserverbundstoff bestehen, an der bereits vorgefertigten Felge befestigt. Das gesamte Laufrad wird zum Abschluss erneut gehärtet, um einen festen Verbund zwischen Felge und den Speichen zu gewährleisten.

In diesen Herstellungsverfahren wird wie bei herkömmlichen Prozessen zur Verarbeitung von Faserverbundwerkstoffen laminiert. Unter das Laminieren fällt auch der Arbeitsschritt des Aushärtens. Beispiele für übliche Laminierverfahren sind in DUBBEL, Taschenbuch für Maschinenbau, 22. Auflage, F25 aufgeführt.

Der vorgängig aus dem Stand der Technik beschriebene Prozess hat den Nachteil, dass im Wesentlichen zwei separate Verfahren erforderlich sind, zum Einen die Herstellung der Felge, Speichen und Nabe und zum Anderen die Fixierung der einzelnen Speichen an der Felge und am Zentrumshalter bzw. an der Nabe.

Wie bereits erwähnt, spielt die Aerodynamik im Radsport eine zunehmende Rolle. Im Allgemeinen gilt es den aerodynamischen Widerstand des Laufrads sowie die Robustheit bei Seitenwind zu optimieren. Viele Firmen versuchen daher in diesem Zusammenhang besondere Felgengeometrien zu entwickeln. Die in den letzten Jahren entwickelten Felgenquerschnitte weisen zum einen V-Formen auf, aber auch "bauchigere" Querschnitte gewinnen zunehmend an Bedeutung, um das Ablöseverhalten bei Seitenwind besser kontrollieren zu können. Das Ablöseverhalten der Strömung am Felgenprofil hat grossen Einfluss auf den Fahrkomfort und Linienführung bei Seitenwind.

Die Firma Zipp vermarktet seit Jahren sogenannte Aeroräder, bei welchen die Felge eine Art Golfballoberfläche aufweist.

Als Beispiel für eine aktuelle Entwicklung im Bereich Felgengeometrien für Carbonlaufräder sei an dieser Stelle die US 2014/0292061 A1 der Firma Reynolds Cycling LLC erwähnt. Dieses Dokument offenbart eine asymmetrische Geometrie einer Felge aus Carbonfaser mit vorgespannten Speichen aus Stahl. Ebenfalls beschrieben wird die Herstellung der asymmetrischen Felgengeometrie, insbesondere die Anordnung der Carbonfaserlagen in einer Negativform. Erwähnt werden die Fixierung und das Vorspannen der Speichen. Dieses Dokument zeigt jedoch nicht, wie die einzelnen Speichen an der asymmetrischen Felge zuverlässig fixiert werden und wie der Vorspannprozess der einzelnen Speichen durchgeführt wird.

In der EP 1985465 A1 werden eine Speiche, ein Rad und ein Verfahren zur Herstellung einer Speiche aus einem Faserverbundwerkstoff beschrieben. Bei der Fertigung des Rades erfolgt zuerst die Herstellung der Speichen in einem separaten Prozessschritt im Sinne einer Vorfertigung. Diese Speichen werden dann in einem weiteren Verfahrensschritt mit der ebenfalls vorgefertigten Felge verbunden. Nachteilig an diesem Verfahren ist die Verbindung der Felge und der Speichen in zwei Schritten. Um einen möglichst grossen Halt der Speichen in der Felge zu gewährleisten, ist es erforderlich, die Speichen an ihren Enden speziell aufzufächern, sodass eine zuverlässige Verbindung der Speiche mit der Felge überhaupt möglich gemacht werden kann.

Weitere Beispiele für Fahrradlaufräder aus Verbundmaterial, bei welchen vorgespannte Speichen zum Einsatz kommen, finden sich in EP 1 795370 A1 und DE 9201179. In beiden Dokumenten werden die Speichen in einem separaten Prozessschritt in eine Ausnehmung, welche an der Felge sitzt, eingesetzt und beispielsweise durch eine Schraubenverbindung befestigt und gespannt.

Weiterhin sind auch aus der DE 10 2008 007 722 A1 Zugspeichen aus Verbundwerkstoffen bekannt.

DARSTELLUNG DER ERFINDUNG

Es ist eine Aufgabe der Erfindung, ein Fahrradlaufrad aus einem Faserverbundwerkstoff sowie ein Verfahren zur Herstellung eines Fahrradlaufrads zu schaffen,wobei Nachteile bekannter Lösungen mindestens bereichsweise vermieden werden sollen. Ferner soll der Fahrkomfort des Fahrradlaufrads optimiert und der Herstellungsprozess verbessert werden.. Das Fahrradlaufrad zeichnet sich insbesondere durch seine einfache, leichte und gleichzeitig robuste Bauweise aus, ohne dass dabei auf die hervorragenden Eigenschaften vorgespannter Speichen verzichtet werden muss. Das Herstellungsverfahren zeichnet sich insbesondere durch die geringe Anzahl an Prozessschritten aus, wodurch das Risiko möglicher Fehlproduktionen minimiert und Produktionszeiten entsprechend verringert werden können.
Die Aufgabe wird durch die Merkmale der Ansprüche gelöst.
Im Folgenden ist von einem Fahrradlaufrad die Rede, so deckt dieser Begriff sowohl das Hinterrad als auch das Vorderrad ab.
Ist im Folgenden vom laminierten Zustand des ersten und zweiten Speichenabschnitts die Rede, definiert dies einen initialen Zustand der Speichen. In diesem initialen Zustand ist der erste und zweite Speichenabschnitt ungespannt und noch nicht mit einer Speichenvorspannkraft beaufschlagt.
Ist im Folgenden von einem vorgespannten Zustand des ersten und zweiten Speichenabschnitts die Rede, definiert dies einen finalen Zustand der Speichen, bei welchem die Speichen mit einer Speichenvorspannkraft beaufschlagen, d.h. vorgespannt sind. Die im Anschluss eingesetzte Nabe hält die Speichen im vorgespannten Zustand und daher im finalen Zustand.
Das erfindungsgemässe Fahrradlaufrad, welches vorzugsweise Scheibenbremsen aufweist, ist aus einem Faserverbundwerkstoff gefertigt. Diese Art von Fahrradlaufrädern kommt bevorzugt im Rennsport zum Einsatz. Es umfasst eine Felge und eine Mehrzahl von Speichen, wobei die Speichen je einen ersten sowie einen zweiten Speichenabschnitt aufweisen, welcher je zwischen der Felge und dem Zentrum des Fahrradlaufrades verläuft. Das Zentrum umfasst zwei gegenüberliegende Zentrumsscheiben.
Bei den Speichen handelt es sich um sogenannte vorgespannte Speichen. Erfindungsgemäss weist der erste und zweite Speichenabschnitt der Speichen, in einem laminierten Zustand, eine geschwungene Form auf. In einem vorgespannten Zustand, verlaufen die Speichenabschnitte im Wesentlichen gerade.
Durch die Ausführung in einer geschwungenen Form im laminierten Zustand werden in vorteilhafterweise Spannungsspitzen, welche beim Vorspannprozess in den Speichen bzw. den Speichenabschnitten entstehen, reduziert, was bei Speichen die gerade laminiert und anschliessend vorgespannt werden, nicht der Fall ist. Bei solchen Speichen entstehen, insbesondere in den Bereichen in denen die Speichenabschnitte in Verbindung mit der Felge und dem Zentrum bzw. den Zentrumsscheiben stehen, hohe Spannungen aufgrund von Biegemomenten, die unerwünscht sind und die maximal mögliche Belastung der Speiche reduzieren. Durch das erfindungsgemässe Fahrradlaufrad wird eine möglichst homogene Spannungsverteilung in den Speichen bzw. den einzelnen Speichenabschnitten erzielt. Des Weiteren wird durch eine homogene Spannungsverteilung in den Speichen die Bremskrafteinleitung verbessert. Speichen mit einer homogenen Spannungsverteilung haben sich darüber hinaus als resistenter gegenüber Steinschlägen, welche im Gelände häufig direkt auf die Speichen erfolgen, erwiesen. Durch die Reduktion der Spannungsspitzen können Bremskräfte, welche durch eine Scheibenbremse eingeleitet werden, verbessert in die Felge eingeleitet werden. Bedingt durch die Laminierung in einer geschwungenen Form ist der Bereich in dem der erste und zweite Speichenabschnitt aus der Felge austritt und jener Bereich, in dem der erste und zweite Speichenabschnitt mit dem Zentrum, vorzugsweise einer ersten und zweiten Zentrumsscheibe verbunden ist, bereits tangential zu jener Position vorgeformt, die die Speichenabschnitte im vorgespannten Zustand einnehmen.
In einer bevorzugten Ausführungsform der Erfindung weist die geschwungene Form die Form einer S-Kurve auf. Diese Kurve verläuft bis zu ihrem ersten Nulldurchgang, d.h. eine Hälfte der S-Kurve, nach der Biegelinie eines Biegebalkens aus der einfachen Balkentheorie. In dieser Ausführungsform nimmt die S-Kurve einen symmetrischen Verlauf an.

$$w(x)_{Skurve} = \frac{Y_{bgl}}{2} * \left[ 3\left(\frac{x}{L}\right)^2 - \left(\frac{x}{L}\right)^3 \right]$$

In der obigen Biegebalkenformel handelt es sich bei Ybgl um die Verschiebung zwischen dem laminierten Speichenabschnitt und dem vorgespannten Speichenabschnitt an einer Stelle L, wobei L die Hälfte des Speichenabschnitts darstellt.
In einer weiteren bevorzugten Ausführungsform weist die S-Kurve eine asymmetrische Form auf. Eine asymmetrische S-Kurve ist dadurch gekennzeichnet, dass die halbe S-Kurve von der Biegelinie abweicht.

In einer weiteren bevorzugten Ausführungsform ist die asymmetrische S-Kurve dadurch gekennzeichnet, dass jener Punkt, welcher die asymmetrische S-Kurve in eine erste und eine zweite Hälfte teilt, näher der Felge als dem Zentrum des Fahrradlaufrades zugeordnet ist.

In einer weiteren bevorzugten Ausführungsform ist die asymmetrische S-Kurve dadurch gekennzeichnet, dass jener Punkt, welcher die asymmetrische S-Kurve in eine ersten und eine zweite Hälfte teilt, näher dem Zentrum des Fahrradlaufrads zugeordnet ist als der Felge.

In einer weiteren bevorzugten Ausführungsform des erfindungsgemässen Fahrradlaufrads bilden die Speichen eine erste und eine zweite Speichengruppe. Die Speichen der ersten Speichengruppe verlaufen zwischen ersten Fusspunkten angeordnet an der Felge, einer Bremsscheibenseite des Zentrums, wobei das Zentrum vorzugsweise durch zwei gegenüberliegende Zentrumsscheibe ausgebildet ist und zweiten Fusspunkten, welche im Wesentlichen gegenüber den ersten Fusspunkten ebenfalls an der Felge angeordnet sind. Die Speichen der zweiten Speichengruppe verlaufen zwischen weiteren ersten Fusspunkten angeordnet an der Felge, einer Nicht-Bremsscheibenseite des Zentrums, wobei das Zentrum vorzugsweise als weitere Zentrumsscheibe ausgebildet ist und weiteren zweiten Fusspunkten, welche im Wesentlichen den weiteren ersten Fusspunkten gegenüberliegen und ebenfalls an der Felge angeordnet sind. Die Speichen umfassend den ersten und zweiten Speichenabschnitt verlaufen in ihrem Faserverlauf durchgängig zwischen den beiden Fusspunkten.

In einer weiteren bevorzugten Ausführungsform bilden die Speichen eine erste und eine zweite Speichengruppe. Die ersten Speichenabschnitte der Speichen der ersten Speichengruppe verlaufen dabei zwischen den ersten Fusspunkten angeordnet an der Felge an einer Bremsscheibenseite und der Bremsscheibenseite des Zentrums. Die zweiten Speichenabschnitte verlaufen zwischen der Bremsscheibenseite des Zentrums und zweiten Fusspunkten angeordnet an der Felge an der Bremsscheibenseite. Die ersten Speichenabschnitte der Speichen der zweiten Speichengruppe verlaufen zwischen ersten Fusspunkten angeordnet an der Felge an der Nicht-Bremsscheibenseite und der Nicht-Bremsscheibenseite des Zentrums. Die zweiten Speichenabschnitte verlaufen zwischen der Nicht-Bremsscheibenseite des Zentrums und zweiten Fusspunkten angeordnet an der Felge an der Nicht-Bremsscheibenseite.

In einer weiteren Ausführungsform verlaufen die ersten Speichenabschnitte der Speichen der ersten Speichengruppe zwischen ersten Fusspunkten angeordnet an der Felge an einer Nicht-Bremsschreibenseite und der Bremsscheibenseite des Zentrums. Die zweiten Speichenabschnitte verlaufen zwischen der Bremsscheibenseite des Zentrums und zweiten Fusspunkten angeordnet an der Felge an der Nicht-Bremsscheibenseite. Die ersten Speichenabschnitte der Speichen der zweiten Speichengruppe verlaufen zwischen ersten Fusspunkten angeordnet an der Felge an der Bremsscheibenseite und der Nicht-Bremsscheibenseite des Zentrums. Die zweiten Speichenabschnitte verlaufen zwischen der Nicht-Bremsscheibenseite des Zentrums und zweiten Fusspunkten angeordnet an der Felge an der Bremsscheibenseite. Durch diese erfindungsgemässe Anordnung der Speichen erfolgt eine bessere Krafteinleitung von der Speiche in die Felge. Ferner führt dies zu einer Verbesserung des Faserverlaufs, sodass die Stabilität der Speichen in den Fusspunkten gesteigert wird. Das Risiko, dass die Speichen an den Fusspunkten, ausreissen wird minimiert.

In einer weiteren bevorzugten Ausführungsform sind die ersten und zweiten Fusspunkte der ersten Speichengruppe und/oder die ersten und zweiten Fusspunkte der zweiten Speichengruppe beabstandet zu einem Scheitel S der Felge angeordnet. Der Abstand der ersten und zweiten Fusspunkte der ersten Speichengruppe zum Scheitel S der Felge ist grösser als der Abstand der ersten und zweiten Fusspunkte der zweiten Speichengruppe. Beim Scheitel S der Felge handelt es sich um jenen Bereich des Felgenkörpers, welcher dem Felgenbett gegenüberliegt. Beim Vorspannen der Speichen wird das Felgenbett zentral positioniert. Erfindungsgemäss ist die Felge vorzugsweise als symmetrischer Körper ausgebildet, besonders bevorzugt als symmetrischer Hohlkörper. Geht man von einer symmetrischen Felgengeometrie aus, liegt der tiefste Punkt des Felgenbetts und der Scheitel S in einer Ebene, der Symmetrieebene der Felge, welche gleichzeitig eine vertikale Symmetrieebene des Fahrradlaufrads bildet.

Der Scheitel S verläuft im Schnitt der Symmetrieebene des Fahrradlaufrads mit dem Felgenkörper und ist dem Zentrum des Fahrradlaufrades zugewandt. Um das Fahrgefühl des Fahrradlaufrades zu verbessern, ist es vorteilhaft, wenn die Speichenspannung im vorgespannten Zustand sowohl in den Speichen der ersten Speichengruppe auf der Bremsscheibenseite als auch in den Speichen der zweiten Speichengruppe auf der Nicht-Bremsscheibenseite annähernd gleich gross ist. Dies wird unter anderem durch die erfindungsgemässe Anordnung der Fusspunkte erzielt. Eine symmetrische Form der Felge verbessert darüber hinaus die Aerodynamik des Fahrradlaufrades per se.

In einer bevorzugten Ausführungsform weist das Zentrum zwei gegenüberliegende Zentrumsscheiben, eine auf der Bremsscheibenseite und eine auf der Nicht-Bremsscheibenseite auf, wobei die Zentrumsscheiben um einen Winkel gamma ($\gamma$) geneigt zu einer Achse w ausbildet sind, wobei der Winkel gamma ($\gamma$) einen Wert zwischen 6 bis 8° aufweist. Ein Vorteil, welcher aus der Neigung der Zentrumsscheiben resultiert, ist die Minimierung radialer interlaminarer Kräfte, welche beispielsweise beim Vorspannen der Speichen auftreten können.

In einer weiteren bevorzugten Ausführungsform bilden die ersten und die zweiten Speichenabschnitte der Speichen einzelne Kreuzungspunkte, wobei die Kreuzungspunkte durch einzelne unidirektionale Faserlagen der Speichenabschnitte gebildet werden. Durch die Anordnung in mehreren Lagen verdickt sich der Querschnitt im Kreuzungspunkt. Der Kreuzungspunkt der Speichenabschnitte wird erfindungsgemäss dadurch ausgebildet, dass die Lagen des ersten Speichenabschnitts abwechselnd mit den Lagen des weiteren ersten Speichenabschnitts laminiert sind, sodass am Kreuzungspunkt eine Verwebung entsteht. Durch diese Verwebung resultiert ein solides Speichenkreuz, wobei dieses Speichenkreuz die Systemsteifigkeit erhöht. Beispielsweise wird eine erste Lage des ersten Speichenabschnitts überlagert von einer erste Lage eines weiteren ersten Speichenabschnitts, wobei diese erste Lage dann von einer zweiten Lage des ersten Speichenabschnitts überlagert wird, gefolgt von einer zweiten Lage des zweiten Speichenabschnitts. In einer bevorzugten Ausführungsform ist der Kreuzungspunkt durch mindestens vier Lagen gebildet. Durch den erfindungsgemässen Aufbau des Kreuzungspunktes erfolgt ein Verweben, sodass zusätzliche stoffschlüssige Verbindungen der einzelnen Speichenabschnitte vermieden werden können.

In einer weiteren bevorzugten Ausführungsvariante nehmen die ersten und zweiten Speichenabschnitte der ersten Speichengruppe, im vorgespannten Zustand zur Aussengeometrie der Felge, insbesondere des Felgenkörpers einen Einführungswinkel ß (beta) ein, welcher vorzugsweise zwischen 120° und 180° liegt und die ersten und zweiten Speichenabschnitte der zweiten Speichengruppe nehmen einen Einführungswinkel $\alpha$ (alpha) ein, welcher grösser 90° ist.

In einer weiteren bevorzugten Ausführungsform der Erfindung weist die Felge keinen symmetrischen sondern einen asymmetrischen Felgenkörper auf. Der asymmetrische Felgenkörper weist dabei eine Querschnittsfläche bzw. einen Querschnitt auf, welche bezüglich der Symmetrieebene des Fahrradlaufrads asymmetrisch ausgebildet ist.

In einer Ausführungsform des Fahrradlaufrads mit asymmetrischen Felgenkörper, weist der asymmetrische Felgenkörper im Bereich der ersten und der zweiten Fusspunkte der Speichen der ersten Speichengruppe einen anderen Felgenquerschnitt auf, als im Bereich der ersten und zweiten Fusspunkte der Speichen der zweiten Speichengruppe. Bedingt durch die Variation des Querschnitts ist die Felge bezüglich der Drehachse des Fahrradlaufrads nicht rotationssymmetrisch, sprich rotationsasymmetrisch ausgebildet. In einer weiteren Ausführungsform des Fahrradlaufrads mit asymmetrischen Felgenkörper, weist der asymmetrische Felgenkörper im Bereich der ersten und der zweiten Fusspunkte der Speichen der ersten Speichengruppe den gleichen Felgenquerschnitt auf, als im Bereich der ersten und zweiten Fusspunkte der Speichen der zweiten SpeichengruppeAnders als bei der vorgängig erläuterten Ausführungsform variiert der Querschnitt nicht und die Felge ist bezüglich der Drehachse des Fahrradlaufrads rotationssymmetrisch ausgebildet.

In einer weiteren Ausführungsform des Fahrradlaufrads mit symmetrischem Felgenkörper, weist der symmetrische Felgenkörper im Bereich der ersten und der zweiten Fusspunkte der Speichen der ersten Speichengruppe den gleichen Felgenquerschnitt auf, wie im Bereich der ersten und zweiten Fusspunkte der Speichen der zweiten Speichengruppe. Die Felge ist bezüglich der Drehachse des Fahrradlaufrads daher rotationssymmetrisch ausgebildet.

In einer weiteren Ausführungsform des Fahrradlaufrads mit symmetrischen Felgenkörper ist die Felge bezüglich der Drehachse des Fahrradlaufrads nicht rotationssymmetrisch, sprich rotationsasymmetrisch ausgebildet.

In einer weiteren bevorzugten Ausführungsform, sind die Speichenwinkel "delta" und "epsilon" welche die Speichen zur Symmetrieebene des Fahrradlaufrads sowohl auf der Brems-, als auch auf der Nicht-Bremsscheibenseiten einnehmen, im Wesentlichen gleich gross. Es resultiert auf beiden Seiten eine annähernd gleiche Vorspannkraft der vorgespannten Speichen. Ferner wird die Krafteinleitung optimiert.

Erfindungsgemäss wird die Felge, die Speichen und das Zentrum, aufweisend eine erste und zweite Zentrumsscheibe, in einem Schritt laminiert. Lediglich die Nabe wird in einem separaten Verfahrensschritt eingesetzt und mit dem Zentrum bzw. den Zentrumsscheiben verklebt. Die Stabilität des Fahrradlaufrads wird dadurch erhöht und die Anzahl an Klebestellen, welche zusätzliche Prozessschritte erfordern, verhindert. Durch die einstükkige Herstellung, können insbesondere die Fusspunkte, jene Punkte wo die Speichen in die Felge eintreten, vorteilhaft ausgeführt werden. Vorzugsweise werden die Speichen durchgängig laminiert, d.h. der Faserverlauf des ersten und zweiten Speichenabschnitts verläuft durchgängig zwischen den Fusspunkten. In einem Schritt laminieren heisst, dass die Formteile aufweisend die Form für Felge, Speiche und Zentrum in einem Schritt mit Fasern ausgelegt werden. Die Fasern für die Speichen, vorzugsweise unidirektionale Fasern werden dabei durchgängig von einem ersten Fusspunkt zu einem gegenüberliegenden Fusspunkt verlegt. Durch die Fertigung in einem Stück werden zusätzliche Klebestellen vermieden, welche sich insbesondere in jenen Bereichen des Fahrradlaufrades wo Bremskräfte wirken, beispielsweise im Bereich der Bremsscheiben-Aufnahme, wo die Bremskräfte über die Speichen in die Felge geleitet werden, als nachteilig erweisen. Des Weiteren wird durch die Vermeidung zusätzlicher Klebestellen Gewicht gespart.

Beim erfindungsgemässen Verfahren wird nach Abschluss des ersten Grundschritts umfassend das Laminieren und das Aushärten ein Fahrradlaufrad erhalten, welches die Felge, das Zentrum mit einer ersten und einer zweiten Zentrumsscheibe, sowie die noch nicht vorgespannten Speichen verbunden mit der Felge und den Zentrumsscheiben umfasst. Nach Abschluss des zweiten Grundschritts wird ein Fahrradlaufrad mit vorgespannten Speichen erhalten.

Unter Laminieren in einem Schritt ist zu verstehen, dass alle Fasern, beispielsweise Fasern aus sogenanntem Prepreg Material (vorimprägnierte Fasern) für Felge, die Speichen und das Zentrum, aufweisend zwei Zentrumsscheiben, in einem Prozessschritt in den dafür vorgesehenen Formteilen eingelegt werden, bevor das Aushärten erfolgt. Nach dem Aushärten wird ein einstückiges Produkt, ein Fahrradlaufrad umfassend Felge, Speichen und das Zentrum erhalten. In einem zweiten Grundschritt erfolgt dann das Vorspannen der Speichen, in dem das Zentrum bzw. die beiden Zentrumsscheiben in horizontaler Richtung annähernd auf die Grösse der nachfolgend eingesetzten Nabe auseinander gezogen werden, bevor diese eingesetzt wird. Durch die Fertigung in einem Stück werden zeitraubende weitere Prozessschritte, wie beispielsweise ein Verbinden von vorgefertigten Speichen mit der Felge, vermieden.

Vorteile welche insbesondere aus der erfindungsgemässen Herstellung resultieren, sind ein hochpräziser Rundlauf, Laufruhe auch bei hohen Geschwindigkeiten sowie ein stark verbessertes Rotationsträgheitsmoment.

In einer bevorzugten Ausführungsvariante des erfindungsgemässen Verfahrens werden im ersten Grundschritt die ersten und zweiten Speichenabschnitte, welche zwischen der Felge und dem Zentrum verlaufen, je in einer geschwungenen Form laminiert, vorzugsweise in einer S-Form, sodass im zweiten Grundschritt beim Vorspannen der Speichen, der erste und der zweite Speichenabschnitt einen im Wesentlichen geraden Verlauf annimmt.

Das Aushärten kann im erfindungsgemässen Verfahren, vorzugsweise in einem Autoklaven erfolgen. Nachdem die Felge, die Speichen und das Zentrum in den beiden Formteilen laminiert wurden, wird ein formungebundenes Füllmittel, beispielsweise ein Vakuumschlauch oder ein Schaummaterial zwischen die Formteile eingebracht. Beim Anlegen eines Unterdrucks, in dem Luft aus der Form gesaugt wird, vergrössert sich das Volumen des formungebundenen Füllmittels entsprechend und drückt die laminierte Felge in eine gewünschte Position.

Als alternatives Aushärtungsverfahren steht das Spritzpressverfahren zur Verfügung. Bei der Anwendung des Spritzpressverfahren kommen trockene Fasern zum Einsatz, d.h. Fasern, welche beim Einlegen, im Vergleich zu den Prepreg-Fasern noch nicht mit Harz getränkt sind. Beim Spritzpressverfahren werden die Formteile aneinander gepresst und durch Einbringen von Druckluft in ein formungebundenes Füllmittel die Felge in ihre gewünschte Form gebracht. Beim Spritzpressen erfolgen das Einbringen von Harz und der Prozess des Aushärtens in einem Schritt.

Die Ausbildung der Speichen erfolgt, in einer bevorzugten Ausführungsvariante des erfindungsgemässen Verfahrens dadurch, dass auf die laminierten Speichen in den Formteilen eine Stempelform aufgebracht wird. Diese Stempelform, weist Vorsprünge auf die im Wesentlichen formschlüssig mit den Formteilen zusammenwirken und dazu dienen, die Speichen in eine gewünschte Form zu bringen, beispielsweise einen elliptischen Querschnitt auszuformen. Durch diese weitere Form ist es möglich, Speichen von hoher Qualität herzustellen. Des Weiteren können die Speichen aus einem unidirektionalen Gelege ohne eine zusätzliche Deckschicht laminiert werden.

Das erfindungsgemässe Fahrradlaufrad ist aus einem Faserverbundwerkstoff gefertigt. Bevorzugt werden die Felge, die Speichen, das Zentrum und die Nabe aus Carbonfasern gefertigt. Als Ausgangsmaterial dienen bevorzugt sogenannte Pre-preg Fasern, Halbzeuge, welche bereits mit den entsprechenden Reaktionsharzen vorimprägniert sind.

Weitere Beispiele für Fasern sind Aramid, Glasfaser und Boron Fasern oder eine Kombination aus den genannten Fasern.

Bei der Herstellung des Fahrradlaufrads werden die Felge, sowohl jene aufweisend einen symmetrischen als auch einen asymmetrischen Felgenkörper und die Speichen mit den ersten und zweiten Speichenabschnitten sowie die beiden Zentrumsscheiben in einem Schritt laminiert und ausgehärtet. Die Speichenabschnitte weisen dabei eine geschwungene Form auf. Auf diese Weise werden in einem Stück ein Fahrradlaufrad mit Felge, den beiden Zentrumsscheiben und die bereits mit Felge und den Zentrumsscheiben verbundenen noch nicht vorgespannten Speichen erhalten. In einem zweiten Schritt erfolgen das Vorspannen und das Einsetzen der Nabe. Die Speichen nehmen beim Vorspannen einen geraden Verlauf an.

Um die erfindungsgemäss vorteilhafte Krafteinleitung im Übergang der Speichen zu den Felgen, insbesondere dem Felgenscheitelbereich, zu erreichen, variiert daher die Geometrie bzw. der periphere Verlauf des Felgenscheitelbereichs, d.h. die Felgenscheitellinie entlang der inneren Felgen-Peripherie, wellenlinienartig mit bereichsweise flachverlaufenden Scheitelbereichen. Die beiden Felgenbasislinien verlaufen ihrerseits wie bei herkömmlichen Felgen kreisförmig (entlang der äusseren Peripherie der Felge). Felgenscheitelbereich und Felgenbasislinien sind räumlich über stetig verlaufende Raumflächen miteinander verbunden. In bevorzugten Ausführungsformen wird für die Aussenflächen der Felgen mindestens eine G 1-Stetigkeit vorgesehen. In weiteren bevorzugten Ausführungsformen wird für die Aussenflächen der Felgen maximal eine G2-Stetigkeit vorgesehen.

In einer alternativen Ausführungsform können statt der flachverlaufenden (parallel zu den Felgenbasislinien) Scheitelbereiche diese auch in Laufrichtung des Rades schräg zu den Felgenbasislinien verlaufen, um den Luftwiderstand zu reduzieren. In einer Ausführungsform sind diese in einem spitzen Winkel in Richtung der Laufrichtung, wobei die abfallende Flanke des Scheitels gezielt steiler abfällt, ausgeführt.

In einer alternativen Ausführungsform können statt der flachverlaufenden (parallel zu den Felgenbasislinien) Scheitelbereiche diese auch gegen die Laufrichtung des Rades schräg zu den Felgenbasislinien verlaufen, um den Luftwiderstand zu reduzieren. In einer Ausführungsform sind diese in einem spitzen Winkel gegen die Laufrichtung, wobei die abfallende Flanke des Scheitels gezielt steiler abfällt, ausgeführt.

An den jeweiligen flachverlaufenden Scheitelbereichen können die Speichen so verbunden werden, dass die erwähnte optimale Krafteinleitung bei Belastung erzielt und dadurch die Belastung der laminierten Verbindungsbereiche möglichst minimal gehalten wird.

KURZE ERLÄUTERUNG ZU DEN FIGUREN

Die Erfindung soll nachfolgend im Zusammenhang mit der Zeichnung anhand von Ausführungsbeispielen näher erläutert werden. Es zeigen:

Fig. 1        eine schematische Darstellung einer Hälfte des Felgenquerschnitts, ein erster Speichenabschnitt in einem laminierten Zustand und in einem vorgespannten Zustand, in einer ersten Ausführungsform,

Fig. 2        eine schematische Darstellung einer Hälfte des Felgenquerschnitts, ein erster Speichenabschnitt in einem laminierten Zustand und in einem vorgespannten Zustand in einer zweiten Ausführungsform,

Fig. 3        eine schematische Darstellung des Querschnitts durch das Fahrradlaufrad in einem laminierten Zustand (a), einem Zustand beim Vorspannen (b) und einem vorgespannten Zustand (c),

Fig. 4        eine teilweise schematische Schnittdarstellung einer Hälfte des Felgenquerschnitts, ein erster und zweiter Speichenabschnitt, der ersten und zweiten Speichengruppe in einem vorgespannten Zustand,

Fig. 5        zeigt die Ansicht aus Figur 4 mit den Einführungswinkeln $\alpha$ (alpha) und ß (beta) der ersten Speichenabschnitte der ersten und zweiten Speichengruppe, im vorgespannten Zustand, in einer teilweisen schematischen Schnittdarstellung,

Fig.6        zeigt die Resultate einer FEM-Simulation des Vorspannungsprozesses eines Speichenabschnitts, ein Vergleich zwischen einer gerade laminierten und eines geschwungenen laminierten Speichenabschnitts,

Fig. 7        zeigt schematisch eine teilweise Schnittdarstellung durch die Felge, wobei die Integration der Speiche in der Felge gezeigt wird,

Fig. 8        zeigt eine Schnittdarstellung durch einen Kreuzungspunkt von Speichenabschnitten,

Fig. 9        zeigt eine perspektivische Ansicht des erfindungsgemässen Fahrradlaufrads,

Fig. 10      zeigt eine Explosionsdarstellung eines Werkzeugs zur Herstellung des erfindungsgemässen Laufrads,

Fig. 11      zeigt schematisch eine weitere Ausführungsform des erfindungsgemässen Fahrradlaufrads in einer vertikalen Schnittdarstellung, insbesondere die Führung der ersten und zweiten Speichenabschnitte,

Fig. 12(a)   zeigt die Ausführungsform aus Fig. 11 in einer detaillierteren Darstellung mit asymmetrischer Felge und Speichenverlauf auf der Bremsscheibenseite des Fahrradlaufrads,

Fig. 12(b)   zeigt die Ausführungsform aus Fig. 11 in einer detaillierteren Darstellung mit asymmetrischer Felge und Speichenverlauf auf der Nicht-Bremsscheibenseite des Fahrradlaufrads,

Figur 13(a)  zeigt einen teilweisen Ausschnitt aus der Fig. 12(a) umfassend einen Querschnitt durch die Felge und einen Speichenabschnitt im vorgespannten Zustand auf der Bremsscheibenseite,

Fig. 13(b)   zeigt einen teilweisen Ausschnitt aus der Fig. 12(b), umfassend einen Querschnitt durch die Felge und einen Speichenabschnitt im vorgespannten Zustand auf der Nicht-Bremsscheibenseite,

Fig. 14      zeigt die Felgen aus Figur 13(a) und Figur 13(b) in einer perspektivischen Ansicht ohne Speichen,

Fig. 14(b)   zeigt eine erste Ausführungsform eines Felgenscheitelbereichs,

Fig 14(c)    zeigt eine zweite Ausführungsform eines Felgenscheitelbereichs,

Fig. 15      zeigt eine schematische Darstellung des Fahrradlaufrads in einer Ansicht von Oben mit einer möglichen Ausführungsform der Zentrumsscheiben, wie sie auf der Bremsscheibenseite als auch auf der Nicht-Bremsscheibenseite des Fahrradlaufrads zu finden sind.

WEGE ZUR AUSFÜHRUNG DER ERFINDUNG

Ist im Folgenden vom laminierten Zustand des ersten und zweiten Speichenabschnitts die Rede, definiert dies einen initialen Zustand der Speichen. In diesem initialen Zustand ist der erste und zweite Speichenabschnitt ungespannt und noch nicht mit einer Speichenvorspannkraft beaufschlagt.

Ist im Folgenden von einem vorgespannten Zustand des ersten und zweiten Speichenabschnitts die Rede, definiert dies einen finalen Zustand der Speichen, bei welchem die Speichen mit einer Speichenvorspannkraft beaufschlagen, d.h. vorgespannt sind. Die im Anschluss eingesetzte Nabe hält die Speichen im vorgespannten Zustand und daher im finalen Zustand.

In einer beispielhaften Ausführungsform ist die Speichenvorspannkraft, welche beim Vorspannen auf die ersten und zweiten Speichenabschnitte aufgebracht wird, auf der Nicht-Bremsscheibenseite annähernd gleich gross wie auf der Bremsscheibenseite des Fahrradlaufrads, vorzugsweise ist die Differenz zwischen den beiden Vorspannkräften weniger als 200 N.

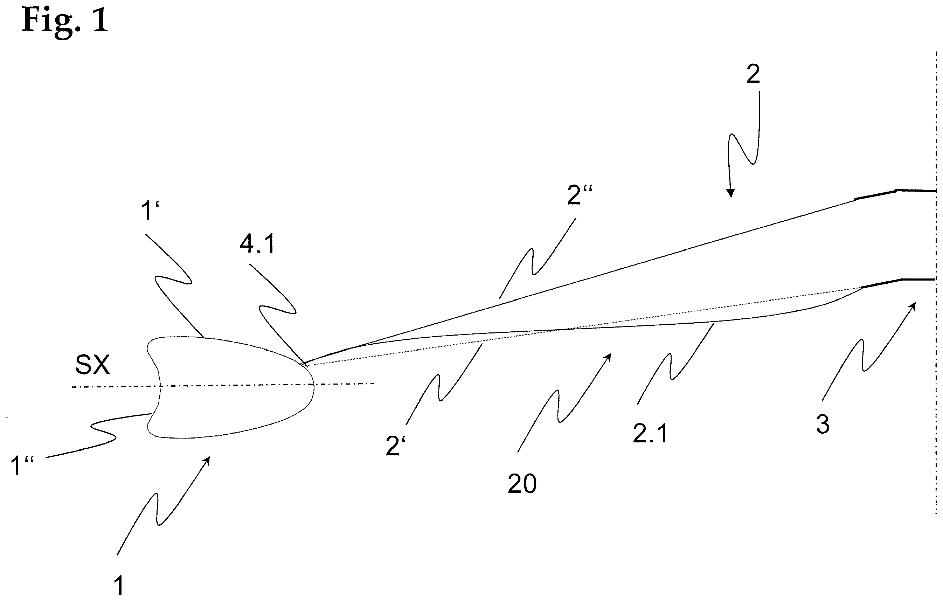

In Figur 1 ist eine bevorzugte Ausführungsform der Geometrie der Speiche 2, insbesondere des ersten Speichenabschnitts 2.1 im laminierten Zustand dargestellt. Die Felge 1 umfasst einen symmetrischen Felgenkörper 1' und ein Felgenbett 1". Figur 1 zeigt dabei eine Hälfte, umfassend den ersten Speichenabschnitt 2.1 einer ersten Speichengruppe 20. Der erste Speichenabschnitt 2.1 verläuft zwischen einem Fusspunkt 4.1 und einem Zentrum 3 des Fahrradlaufrads und ist im laminierten Zustand, bevor die Speichen vorgespannt werden, geschwungen ausgebildet. In der gezeigten Ausführungsform ist die geschwungene Form als symmetrische S-Form ausgebildet, wobei diese Kurvenform die Biegelinie eines Biegebalkens aus der einfachen Balkentheorie annimmt. Die Linie 2' stellt den schematischen Verlauf einer aus dem Stand der Technik bekannten Speiche dar, die im Unterschied zu den erfindungsgemässen ersten und zweiten Speichenabschnitten 2.1, 2.2 in einer gerade verlaufenden Form laminiert wurden. Wie in Figur 1 gezeigt, nähert sich im Bereich des Fusspunktes 4.1, durch die geschwungene S-Form die Speiche 2, bereits im laminierten Zustand an den Verlauf im vorgespannten Zustand 2" an, was zu einer Glättung von Spannungsspitzen im Bereich des Fusspunktes 4.1 und an einem Eintrittspunkt am Zentrum 3 führt. In einer bevorzugten Ausführungsform sind die Speichen 2 aus einem UD (unidirektional) Gelege aus Carbon Faser mit einem Zug E-Modul von 130 GPa bis 215 GPa.

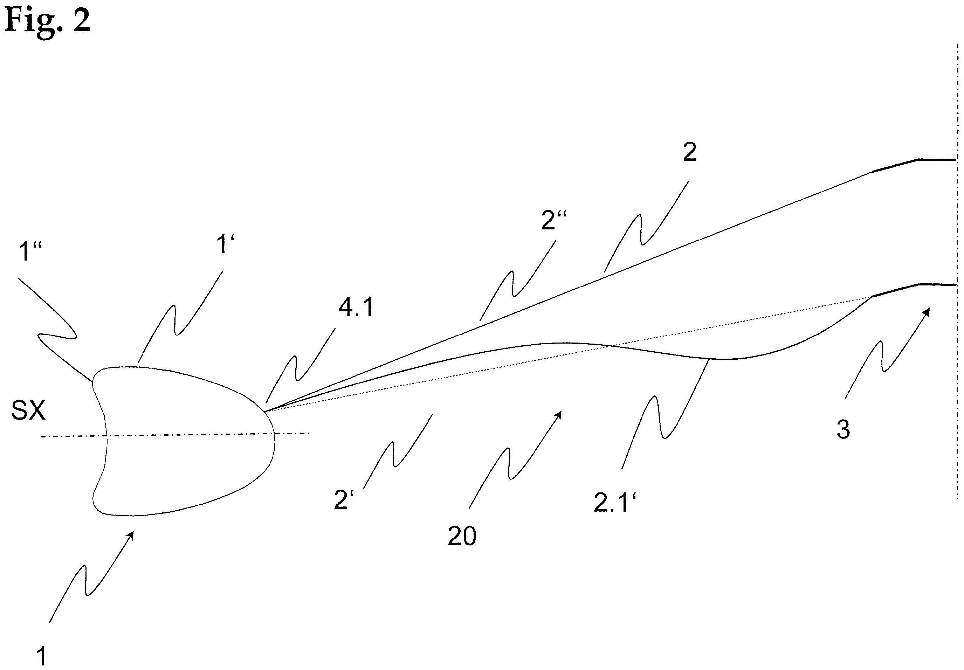

Figur 2 zeigt die Darstellung aus Figur 1 mit dem Unterschied, dass in dieser Ausführungsform die geschwungene Form des gezeigten ersten Speichenabschnitts 2.1' eine asymmetrische Form annimmt, wobei die asymmetrische Form dadurch gekennzeichnet ist, dass die halbe S-Kurve, von der Biegelinie abweicht.

In einer weiteren bevorzugten Ausführungsform (in Fig. 2 nicht dargestellt) ist die asymmetrische S-Kurve dadurch gekennzeichnet, dass jener Punkt, welcher die asymmetrische S-Kurve in eine erste und eine zweite Hälfte teilt, näher bei der Felge als dem Zentrum des Fahrradlaufrades angeordnet ist. Die beiden Hälften der S-Kurve sind nicht gleich gross und daher asymmetrisch.

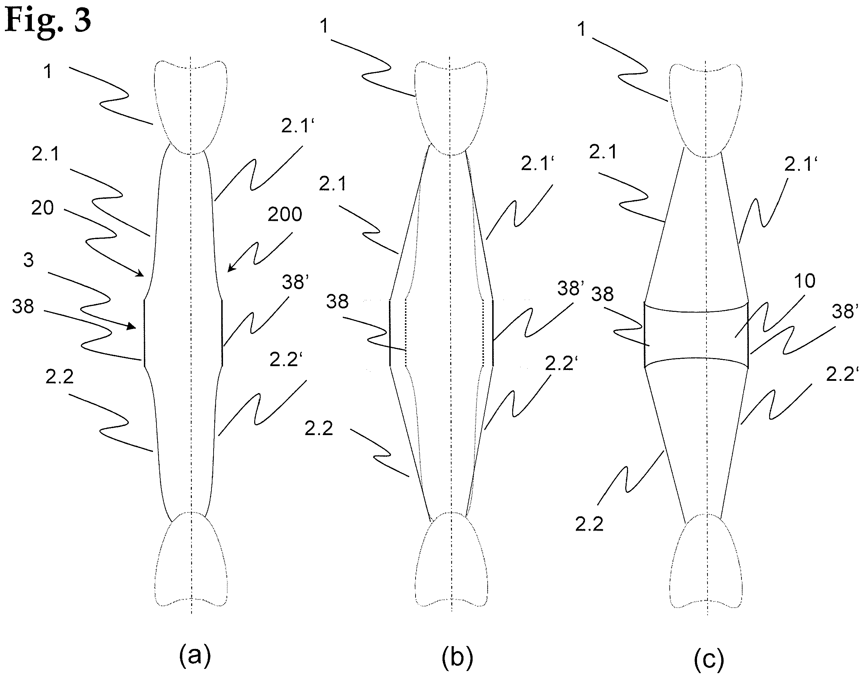

Figur 3 zeigt exemplarisch die drei Schritte (a) bis (c) beim Vorgang des Vorspannens. Die Abbildung 3(a) zeigt einen Querschnitt durch das Fahrradlaufrad im laminierten Zustand. Die Felge 1, die Speichen 2 der ersten und zweiten Speichengruppe 20, 200 umfassend den ersten und zweiten Speichenabschnitt 2.1, 2.2; 2.1' und 2.2' und das Zentrum 3, aufweisend eine erste und zweite Zentrumsscheibe 38, 38' werden dabei in einem Schritt laminiert. Die Speichenabschnitte sind dabei im laminierten Zustand in einer geschwungenen Form ausgebildet. Figur 3(b) zeigt den Vorgang des Vorspannens, das Zentrum 3, vorzugsweise bestehend aus den zwei Zentrumsscheiben 38, 38', wird dabei in horizontaler Richtung, auf in etwa der Grösse der Nabe auseinander gezogen, wobei die Speichenabschnitte 2.1, 2.2, 2.1' und 2.2' von ihrer geschwungenen Form im laminierten Zustand in einen im Wesentlich geraden Verlauf im vorgespannten Zustand überführt werden. Im letzten Schritt, wie in Figur 3(c) dargestellt, wird die Nabe 10 eingesetzt, welche die Speichen im vorgespannten Zustand hält.

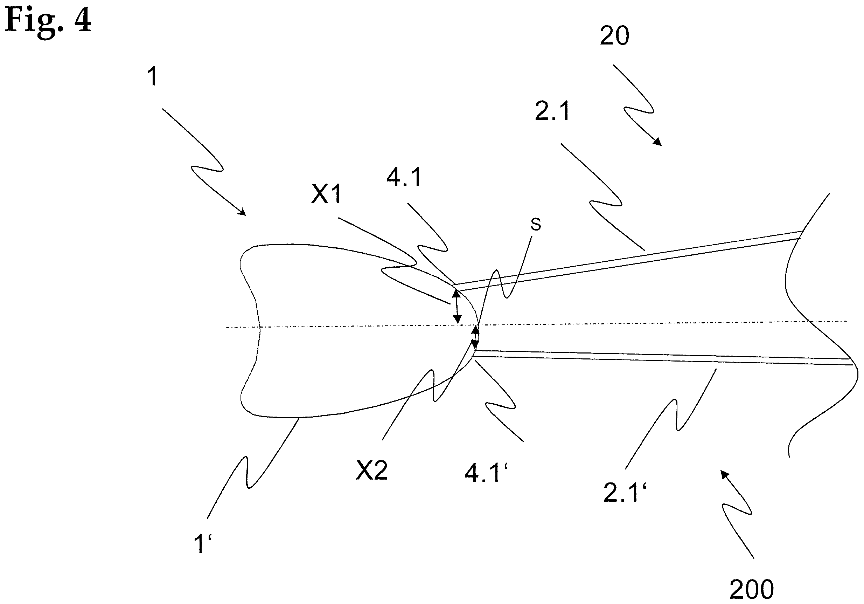

Figur 4 zeigt einen Querschnitt durch die Felge 1, und eine teilweise Darstellung eines ersten Speichenabschnitts 2.1 der ersten Speichengruppe 20 und des ersten Speichenabschnitts 2.1' des zweiten Speichengruppe 200. Die Speichen 2 der ersten Speichengruppe 20, verlaufen zwischen den ersten Fusspunkten 4.1, einer Bremsscheibenseite des Zentrums 3 und einem zweiten Fusspunkt 4.2 (in Figur 4 nicht dargestellt). Die Speichen der zweiten Speichengruppe 200 verlaufen zwischen einem ersten Fusspunkt 4.1', einer Nicht-Bremsscheibenseite des Zentrums 3 und einem zweiten Fusspunkt 4.2' (in Figur 4 nicht dargestellt). Die Fusspunkte sind am Felgenkörper 1' der Felge 1 angeordnet. In dieser Ausführungsform ist die Felge 1, insbesondere der Felgenkörper 1' als symmetrischer Körper ausgeführt. In der Ausführungsform gemäss Figur 4 ist der Abstand X1 den der Fusspunkt 4.1 von der Symmetrieebene der Felge 1 einnimmt, grösser als der Abstand X2, den der Fusspunkt 4.1' ebenfalls zur Symmetrieebene einnimmt. In einer bevorzugten Ausführungsform ist der Abstand X2 in etwa die Hälfte vom Abstand X1, bezogen auf die gezeigte Felgengeometrie.

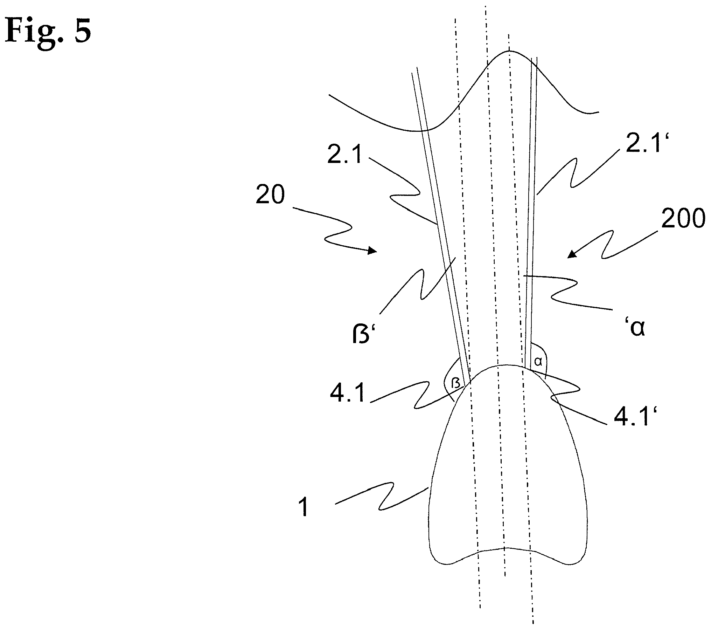

Figur 5 zeigt die Anordnung aus Figur 4, ergänzt um den Einführungswinkel β (beta), den der erste und zweite Speichenabschnitt 2.1, 2.2 der ersten Speichengruppe 20, im vorgespannten Zustand zur Aussengeometrie der Felge 1, gemessen im Fusspunkt 4.1 und 4.2 (nicht dargestellt) einnimmt. Des Weiteren ist der Einführungswinkel α (alpha) gezeigt, welchen der erste und zweite Speichenabschnitt 2.1', 2.2' der zweiten Speichengruppe 200 im vorgespannten Zustand, zur Aussengeometrie der Felge 1, gemessen im ersten und zweiten Fusspunkt 4.1', 4.2' einnimmt. In der in Figur 5 dargestellten, bevorzugten Ausführungsform ist der Einführungswinkel β (beta), bezogen auf die gezeigten Felgengeometrie zwischen 120° und 180°. Der Einführungswinkel α (alpha) weist einen Wert von grösser 90° auf.

In der Figur 5 des Weiteren dargestellt ist ein Winkel ß' (beta-strich) und ein Winkel α' (alpha-strich). Der Winkel α' (alpha-strich) wird gemessen zwischen einer parallelen Ebene zur Symmetrieebene der Felge 1, welche durch den Fusspunkt 4.1' verläuft und dem ersten Speichenabschnitt 2.1', im vorgespannten Zustand auf der Nicht-Bremsscheibenseite 31. Der Winkel ß' (beta-strich) wird gemessen zwischen einer parallelen Ebene zur Symmetrieebene der Felge 1, welche durch den Fusspunkt 4.1 verläuft und dem ersten Speichenabschnitt 2.1, im vorgespannten Zustand auf der Bremsscheibenseite30. Der Winkel α' (alpha-strich) und ß' (beta-strich) unterscheiden sich um einem Wert kleiner oder gleich 2°, wobei α' (alpha-strich) vorzugsweise grösser ß' (beta-strich) ist. Diese Beziehung zwischen α' (alpha-strich) und ß' (beta-strich) ist unabhängig von der gewählten Geometrie der Felge 1.

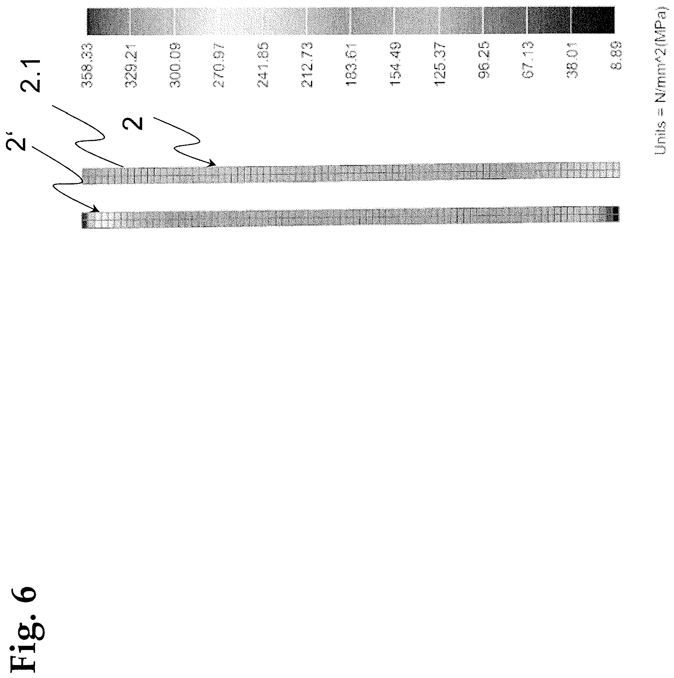

Figur 6 zeigt das Resultat einer FEM-Simulation des Vorspannprozesses, wobei ein Speichenabschnitt einer Speiche 2, welcher im Wesentlichen gerade laminiert und ein Speichenabschnitt 2.1 einer Speiche 2, welcher geschwungen laminiert wurde, gegenübergestellt sind. Betrachtet wurden die Spannungen in Richtung der Speichen. Beide Speichenabschnitte, jener der gerade und jener der geschwungen laminiert wurde, wurden in der FEM-Simulation den identischen Belastungskräften ausgesetzt. Aus den Resultaten des gerade laminierten Speichenabschnitts der Speiche 2' gehen deutliche Spannungsspitzen am Anfang und am Ende des Speichenabschnitts hervor (vgl. schwarz-grau verlaufender Bereiche). Der ursprünglich geschwungen laminierte Speichenabschnitt 2.1 der Speiche 2, zeigt im Vergleich dazu nach dem Vorspannen keine Spannungsspitzen und einen homogenen Spannungsverlauf.

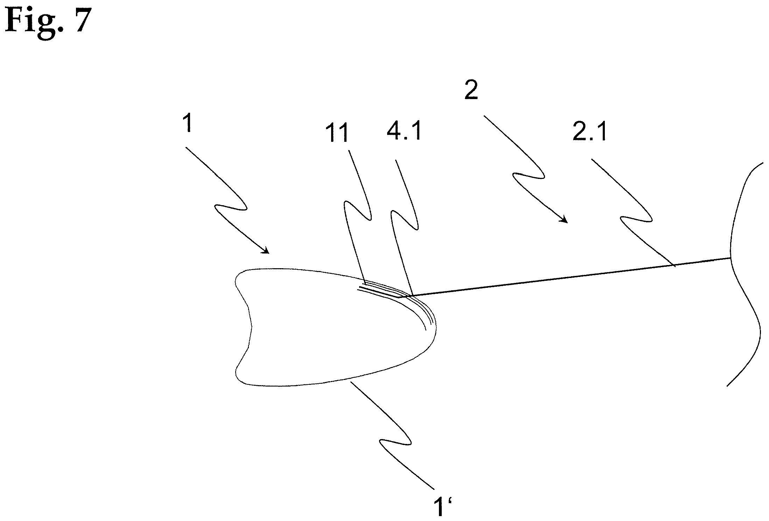

Figur 7 zeigt eine teilweise Darstellung eines Querschnitts durch die Felge 1, in jenem Bereich in dem die Speiche 2, bzw. der Speichenabschnitt 2.1 integriert ist. Die Felge 1, die Speichen 2 und das Zentrum 3 werden bei der Herstellung des Fahrradlaufrads in einem Schritt in einer Aluminiumform oder Stahlform verlegt. In einer bevorzugten Ausführungsform ist die Speiche 2 aus einem unidirektionalen Gelege aus Carbon Faser und die Felge 1 aus einem Gewebe, vorzugsweise ebenfalls aus Carbon Fasern gefertigt.

In einer weiteren bevorzugten Ausführungsform werden die Speichen 2 und die Felge 1 aus einem Gelege, die Speichen aus einem unidirektionalen und die Felge aus einem multidirektionalen Gelege gefertigt.

Die Speiche 2 ist in mehreren Schichten aus dem unidirektionalen Gelege aufbaut. Ihre Fasern verlaufen dabei durchgängig von einem ersten Fusspunkt über das Zentrum 3 des Fahrradlaufrads zu einem zweiten Fusspunkt angeordnet am Felgenkörper (in Figur 7 nicht dargestellt). Bei der Integration der Speiche 2 im Felgenkörper 1' wird das unidirektionale Gelege der Speiche 2 durch mindestens eine, vorzugsweise mehrere Lagen des Gewebes 11, aus welchem die Felge 1 gefertigt ist, auf einer Innenseite des Felgenkörpers 1' befestigt. Die Anzahl der Lagen 11 sowie deren Orientierung können dabei variieren. Ein zusätzliches Verkleben der Speiche 2, beispielsweise am Fusspunkt 4.1, ist nicht erforderlich.

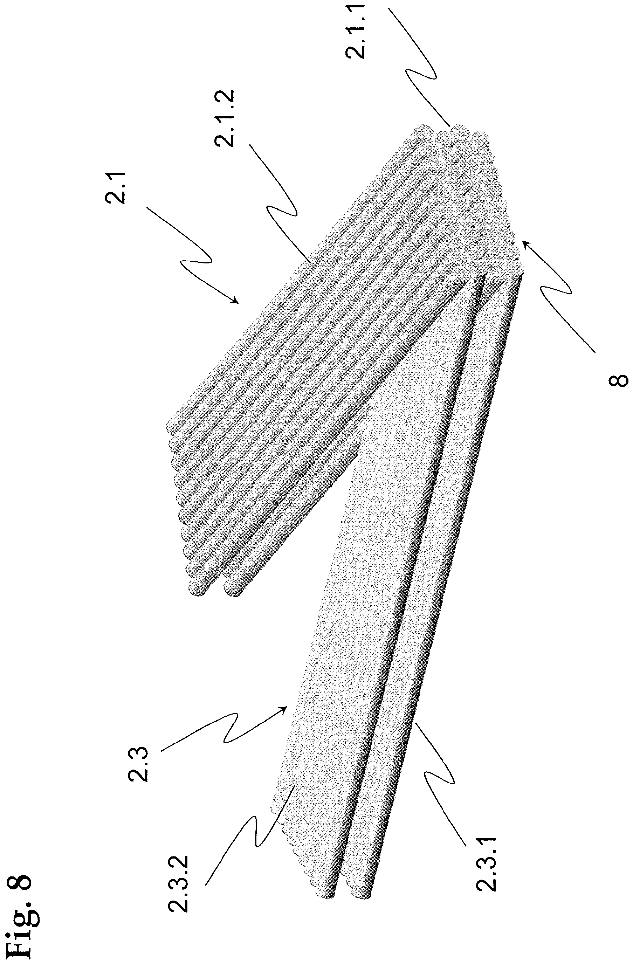

Figur 8 zeigt einen Schnitt durch den Kreuzungspunkt 8, welcher beispielsweise durch zwei erste Speichenabschnitte 2.1, 2.3 verläuft. Da die ersten Speichenabschnitte zu den zweiten Speichenabschnitten symmetrisch sind und eine Speiche 2 bilden, weisen auch die zweiten Speichenabschnitte Kreuzungspunkte 8 auf (in Figur 8 nicht dargestellt). Wie in Figur 8 exemplarisch dargestellt, ist der erste Speichenabschnitt 2.1 und der weitere erste Speichenabschnitt 2.3 aus mehreren Lagen eines unidirektionalen Geleges aufgebaut. Vorzugsweise umfasst der Kreuzungspunkt vier Lagen 2.3.1, 2.3.2, 2.1.1, 2.1.2. In der bevorzugten Ausführungsform gemäss der Figur 8 werden die Lagen 2.1.1 und 2.1.2 der ersten Speichenabschnitte 2.1 abwechselnd mit den Lagen 2.3.1 und 2.3.2 des weiteren ersten Speichenabschnitts 2.3 laminiert, sodass am Kreuzungspunkt 8 eine Verwebung entsteht. In Figur 8 nicht direkt erkennbar ist, dass es am Kreuzungspunkt 8, bedingt durch die mindestens vier Lagen, zu einer Verdickung des Speichenquerschnitts kommt.

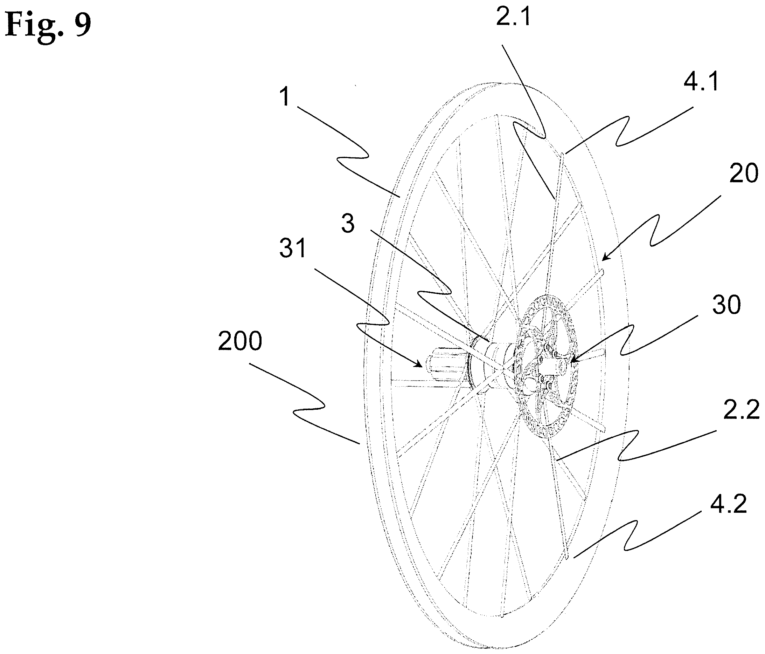

Figur 9 zeigt eine perspektivische Ansicht des erfindungsgemässen Fahrradlaufrads. Gezeigt werden die Speichen der ersten 20, der zweiten Speichengruppe 200 sowie die Nicht-Bremsscheibenseite 31 und die Bremsscheibenseite 30 des erfindungsgemässen Fahrradlaufrads und die Felge 1. Exemplarisch mit Bezugszeichen versehen ist eine Speiche umfassend einen ersten und einen zweiten Speichenabschnitt 2.1, 2.2, wobei diese Speiche durchgängig zwischen den Fusspunkten 4.1 und 4.2, welche an der Felge 1 angeordnet sind verläuft und eine Speiche der ersten Speichengruppe 20 bildet.

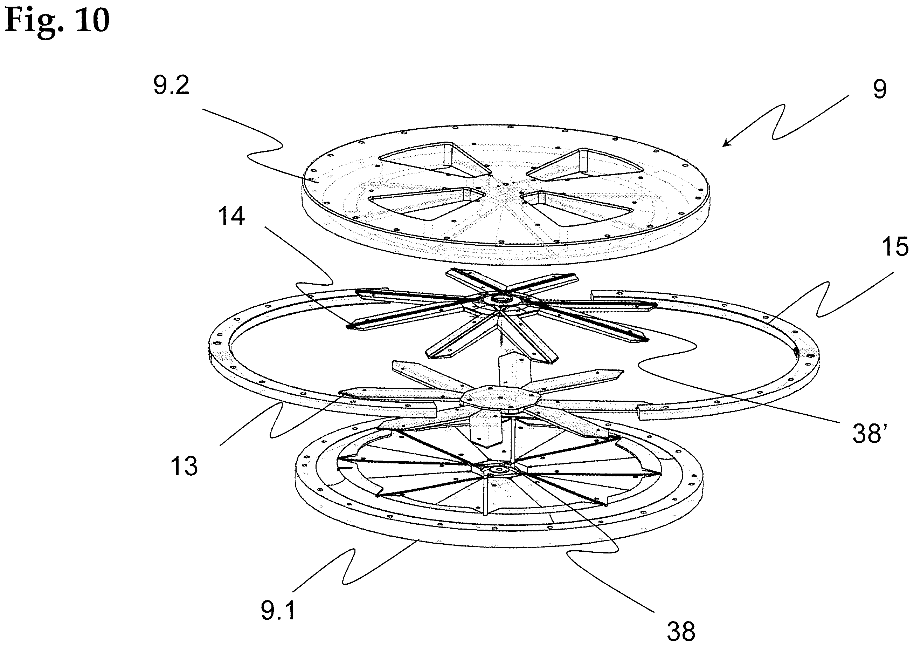

Figur 10 zeigt eine bevorzugte Ausführungsform einer erfindungsgemässen Negativform 9. Die Negativform 9 umfasst einen ersten Teil 9.1 und einen zweiten Teil 9.2. In diese beiden Teile werden, in den dazugehörigen Ausnehmungen, die Fasern? für den Felgenkörper, die Speichen, das Zentrum aufweisend eine erste und zweite Zentrumsscheibe 38, 38' in einem Schritt verlegt. Eine weitere Form 15 bildet die Geometrie des Felgenbetts. Des weiteren gezeigt werden zwei Stempelformen 14 und 13. Im zusammengesetzten Zustand der Negativform 9 wirken die Stempelformen 13 und 14 formschlüssig mit Ausnehmungen für die Speichen zusammen. Auf diese Weise wird ein gewünschter Speichenquerschnitt ausgebildet.

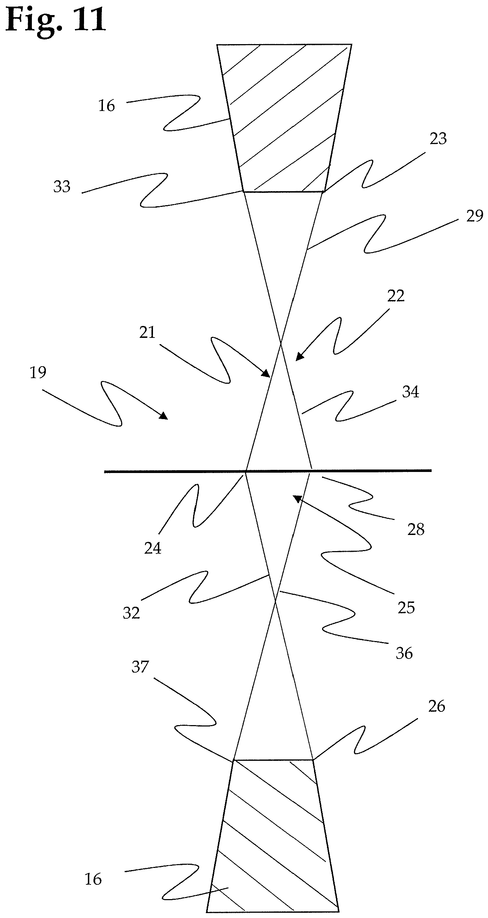

Figur 11 zeigt schematisch eine weitere Ausführungsform des erfindungsgemässen Fahrradlaufrads in einer vertikalen Schnittdarstellung. Die stark vereinfacht dargestellte Felge 16 kann einen symmetrischen oder einen asymmetrischen Felgenkörper aufweisen. In der in Figur 11 gezeigten, bevorzugten Ausführungsform bilden die Speichen 19 eine erste und eine zweite Speichengruppe 21, 22. Die Speichen 19 der ersten und zweiten Speichengruppe 21,22 weisen erste und zweite Speichenabschnitte 29, 32, 34, 36 auf. Wie in Figur 11 gezeigt, verlaufen die ersten Speichenabschnitte 29 der ersten Speichengruppe 21 zwischen ersten Fusspunkten 23 angeordnet an der Felge 16 an einer Nicht-Bremsschreibenseite 28 sowie einer Bremsscheibenseite 24 des Zentrums 25 und die zweiten Speichenabschnitte 32 zwischen der Bremsscheibenseite 24 des Zentrums 25 und zweiten Fusspunkten 26 angeordnet an der Felge 16 an der Nicht-Bremsscheibenseite. Die ersten Speichenabschnitte 34 der Speichen 19 der zweiten Speichengruppe 22 verlaufen zwischen ersten Fusspunkten 33 angeordnet an der Felge 16 an der Bremsscheibenseite und der Nicht-Bremsscheibenseite 28 des Zentrums 25. Die zweiten Speichenabschnitte 36 verlaufen zwischen der Nicht-Bremsscheibenseite 28 des Zentrums und zweiten Fusspunkten 37 angeordnet an der Felge an der Bremsscheibenseite. In der in Figur 11 dargestellten Ausführungsform verlaufen die Speichenabschnitte gerade. Die Speichen sind vorgespannt. Das Zentrum 25 weist zwei gegenüberliegende Zentrumscheiben, eine auf der Bremsscheibenseite 24 und eine auf der Nicht-Bremsscheibenseite 28, auf (in Figur 11 nicht gezeigt).

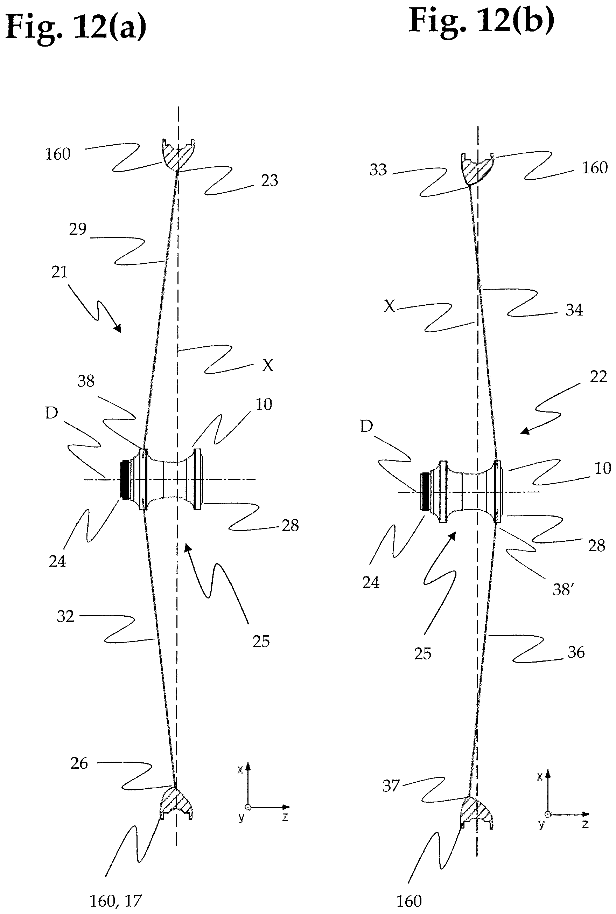

In Figur 12(a) ist die schematische Darstellung aus Fig. 11 am Beispiel einer Felge 160 aufweisend einen asymmetrischen Felgenkörper, welcher nicht symmetrisch bezüglich einer vertikalen Symmetrieebene X ist, näher ausgeführt. Gezeigt wird ein Querschnitt. Am Beispiel einer Speiche aufweisend einen ersten und einen zweiten Speichenabschnitt 29, 32 wird der Verlauf der Speichen der ersten Speichengruppe 21 aufgezeigt. Die Ebene X stellt die vertikale Symmetrieebene und die horizontale Achse D die Drehachse des Fahrradlaufrads dar. In der gezeigten Ausführungsform sind die ersten und zweiten Speichenabschnitte 29, 32 im vorgespannten Zustand gezeigt. Im Zentrum 25 ist die Nabe 10 eingesetzt. Das Zentrum 25 wird durch zwei gegenüberliegende Zentrumsscheiben 38, 38' gebildet. Die Nabe 10 dient dazu, die Speichen im vorgespannten, finalen Zustand zu halten. Das Fahrradlaufrad weist eine Bremsscheibenseite 24 und eine Nicht-Bremsscheibenseite 28 auf. Der erste Speichenabschnitt 29 verläuft zwischen dem ersten Fusspunkt 23, jenem Punkt in welchen der Speichenabschnitt 29 in die Felge 160 eingebunden ist und der Zentrumsscheibe 38 auf der Bremsscheibenseite 24. Der Fusspunkt 23 ist zur Nicht-Bremsschreibenseite 28 hin orientiert. Der zweite Speichenabschnitt 32 verläuft zwischen der Zentrumsscheibe 38 auf der Bremsscheibenseite 24 und dem zweiten Fusspunkt 26, welcher zu Nicht-Bremsscheibenseite 28 hin orientiert ist. An diesem Fusspunkt 26 ist der zweite Speichenabschnitt in die Felge 160 eingebunden.

In Figur 12(b) ist die schematische Darstellung aus Fig. 11 am Beispiel einer Felge 160 aufweisend einen asymmetrischen Felgenkörper, welcher nicht symmetrisch bezüglich einer vertikalen Symmetrieebene X ist, näher ausgeführt. Am Beispiel einer Speiche aufweisend einen ersten und einen zweiten Speichenabschnitt 34, 36 wird der Verlauf der Speichen der zweiten Speichengruppe 22 aufgezeigt. Die Ebene X stellt die vertikale Symmetrieebene und die horizontale Achse D die Drehachse des Fahrradlaufrads dar. In der gezeigten Ausführungsform sind die ersten und zweiten Speichenabschnitte 34, 36 im vorgespannten Zustand gezeigt. Im Zentrum 25 ist die Nabe 10 eingesetzt. Das Zentrum 25 wird durch zwei gegenüberliegende Zentrumsscheiben 38, 38' gebildet. Die Nabe 10 dient dazu, die Speichen im vorgespannten, finalen Zustand zu halten. Das Fahrradlaufrad weist eine Bremsscheibenseite 24 und eine Nicht-Bremsscheibenseite 28 auf. Der erste Speichenabschnitt 34 verläuft zwischen dem ersten Fusspunkt 33, jenem Punkt in welchen der Speichenabschnitt 34 in die Felge 160 eingebunden ist und dem Zentrum 25 ausgebildet als Zentrumsscheibe 38' auf der Nicht-Bremsscheibenseite 28. Der Fusspunkt 33 ist zur Bremsschreibenseite 24 hin orientiert. Der zweite Speichenabschnitt 36 verläuft zwischen der Zentrumsscheibe 38' auf der Nicht-Bremsscheibenseite 28 und dem zweiten Fusspunkt 37, welcher zur Bremsscheibenseite 24 hin orientiert ist. An diesem Fusspunkt 37 ist der zweite Speichenabschnitt 36 in die Felge 160 eingebunden.

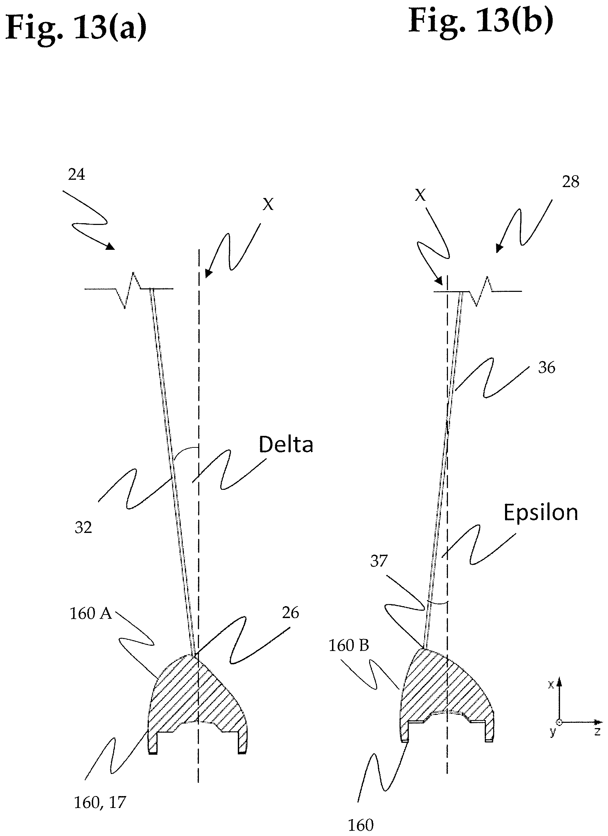

Fig. 13(a) zeigt in einer Querschnittsdarstellung einen Ausschnitt aus der Fig. 12(a) mit der Felge 160 aufweisend einen asymmetrischen Felgenkörper. X ist die Symmetrieebene des Fahrradlaufrads. Dargestellt ist ein Teil des zweiten Speichenabschnitts 32, welcher an der Bremsscheibenseite 24 verläuft und im zweiten Fusspunkt 26 mit der Felge 160 verbunden ist. Ebenfalls in Fig. 13(a) gezeigt ist ein Speichenwinkel Delta welchen die Speichen der ersten Speichengruppe zur Symmetrieebene des Fahrradlaufrads, im vorgespannten Zustand, einnehmen. Stellvertretend für die Speichen der ersten Speichengruppe ist der zweite Speichenabschnitt 32 im vorgespannten Zustand dargestellt.

Fig. 13(b) zeigt in einer Querschnittsdarstellung einen Ausschnitt aus der Fig. 12(b) mit der Felge 160 aufweisend einen asymmetrischen Felgenkörper. X ist die Symmetrieebene des Fahrradlaufrads. Dargestellt ist ein Teil des zweiten Speichenabschnitts 36, welcher an der Nicht-Bremsscheibenseite 28 verläuft und im zweiten Fusspunkt 37 mit der Felge 160 verbunden ist. Ebenfalls in Fig. 13(b) gezeigt ist ein Speichenwinkel Epsilon welchen die Speichen der zweiten Speichengruppe zur Symmetrieebene des Fahrradlaufrads im vorgespannten Zustand einnehmen. Stellvertretend für die Speichen der ersten Speichengruppe ist der zweite Speichenabschnitt 36 im vorgespannten Zustand dargestellt.

Die Fusspunkte 26 und 27 sind insbesondere im Übergang der Speichen in die Felge ausgerundet ausgestaltet.

Aus der Gegenüberstellung der beiden Felgenquerschnitte 160A und 160B ist ersichtlich, dass der Felgenquerschnitt im Bereich jener Fusspunkte 26, aus welchen die ersten Speichenabschnitte 32 der ersten Speichengruppe 21 austreten, einen anderen Querschnitt aufweist, als der Felgenquerschnitt im Bereich der Fusspunkte 37 ,aus welchen die ersten Speichenabschnitte 32 der zweiten Speichengruppe 22 austreten.

Die Speichenwinkel Delta und Epsilon sind annähernd gleich gross, sodass auf der Bremsscheibenseite sowie auf der Nicht-Bremsscheibenseite eine annähernd gleiche Vorspannkraft vorliegt.

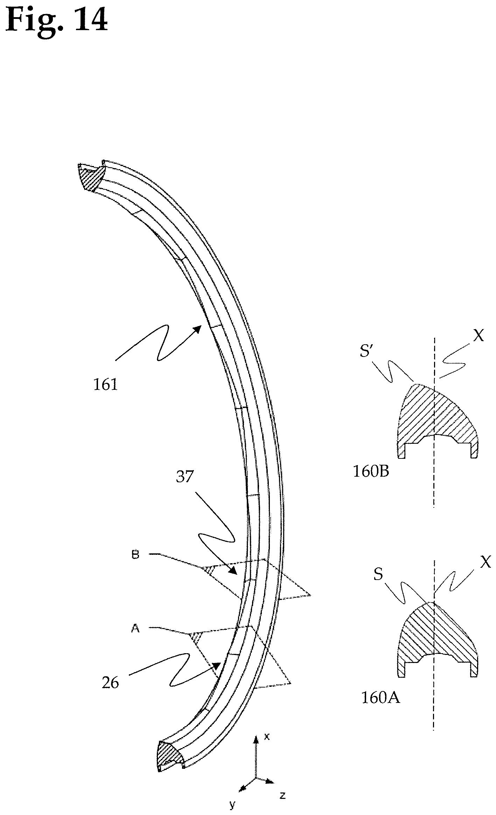

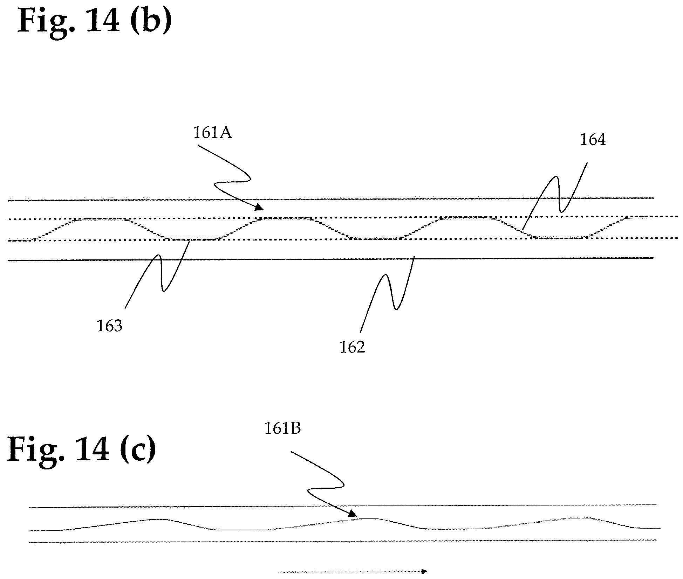

Fig. 14 zeigt eine teilweise Darstellung der Felge 160 aus Fig. 13(a), Fig.13(b) in einer perspektivischen Ansicht.

Ferner ist zumindest teilweise aus der Fig. 14 ersichtlich, dass die Felge 160 nicht rota-tionsymmetrisch, sprich rotationsasymmetrisch, bezüglich der Drehachse D ausgestaltet ist. Die Asymmetrie wird durch eine Variation des Felgenquerschnitts erzielt. Zur besseren Verdeutlichung wurden in den Bereichen der Fusspunkte 26 und der Fusspunkte 37 zwei Schnittflächen A und B gelegt um auf diese Weise die unterschiedlichen Querschnitte 160A und 160B sichtbar zu machen. Beide Querschnitte stellen einen asymmetrischen Felgenkörper dar, das heisst beide Felgenkörper sind asymmetrisch bezüglich der Symmetrieebene X des Fahrradlaufrads. Die Rotationsasymmetrie der Felge bezügliche der Drehachse D wird durch eine Verschiebung des Scheitels S zum Scheitel S' in Richtung der Z-Achse erzielt. Wie insbesondere in der Ausführungsform gemäss Fig. 14 ersichtlich, nimmt der Felgenscheitelbereich 161 keinen runden, sondern einen wellenlinienartigen Verlauf mit flach- oder schrägverlaufenden Scheiteln an ".

In der in Fig. 14 dargestellte Ausführungsformen variieren der Scheitel S, S' des Querschnitts 160A zum Querschnitt 160B bezüglich einer Verschiebung in Richtung der Z-Achse.

Figur 14(b) zeigt eine mögliche Abwicklunge eines Felgenscheitelbereichs 161A umfassend flach- und schrägverlaufende Scheitel 163, 164, bezüglich der beiden Felgenbasislinien 162, welche wie bei herkömmlichen Felgen kreisförmig verlaufen (entlang der äusseren Peripherie der Felge).Bei den flachverlaufenden Scheiteln 163 handelt es sich um Scheitel die parallel zu den Felgenbasislinien 162 verlaufen. Bei den schrägverlaufenden Scheiteln 164 handelt es sich um jene Scheitel, die in Laufrichtung des Fahrradlaufrads gesehen, bestimmte Winkel zur Felgenbasislinie 162 einnehmen, sprich schräg zu diesen verlaufen.

Figur 14(c) zeigt eine alternative Ausführungsform einer Abwicklung eines Felgenscheitelbereichs 161B. Der gezeigte Pfeil deutet die Fahrtrichtung des Fahrradlaufrads an. Gemäss dieser Ausführungsform können statt der flachverlaufenden (parallel zu den Felgenbasislinien) Scheitelbereiche diese auch in Laufrichtung des Rades schräg zu den Felgenbasislinien verlaufen, beispielsweise in einem spitzen Winkel in Richtung der Laufrichtung, wobei die abfallende Flanke des Scheitels gezielt steiler abfällt.

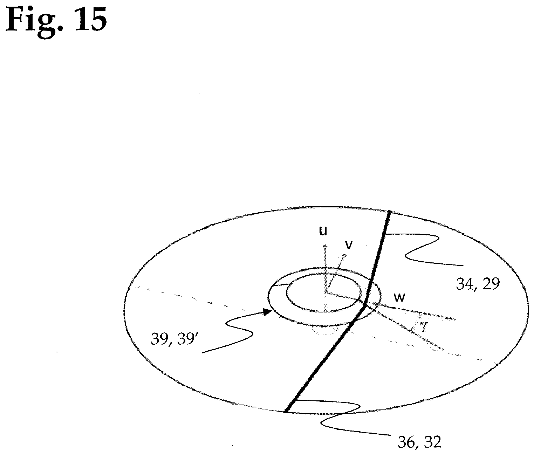

Fig. 15 zeigt eine schematische Darstellung des Fahrradlaufrads in einer Ansicht von oben, wobei anhand dieser Darstellung eine mögliche Ausführungsform der Zentrumsscheibe 39, 39' erläutert werden soll. Wie schematische gezeigt, sind die Speichenabschnitte 34, 36, 29, 32 mit der Zentrumsscheibe 39, 39' verbunden, wobei die Zentrumsscheibe geneigt, in einem Winkel gamma ($\gamma$) zu einer Achse w ausgebildet ist. Bevorzugt beträgt dieser Neigungswinkel zwischen 6 und 8 °. Zentrumsscheibe und Felge liegen nicht in der gleichen Ebene.

BEZUGSZEICHENLISTE

| 1 | Felge |
|---|---|
| 1' | symmetrischen Felgenkörper |
| 1" | ein Felgenbett |
| 2 | Speiche(n) |
| 2' | Speiche(n) (Vergleichsspeiche nach dem Stand der |
| Technik) 2" | Speichenverlauf im vorgespannten Zustand |
| 30 | Bremsscheibenseite |
| 20 | erste Speichengruppe (Bremsscheibenseite) |
| 2.1, 2.3. | erster Speichenabschnitt (Bremsscheibenseite) |
| 2.2 | zweiter Speichenabschnitt (Bremsscheibenseite) |
| 4.1 | erste Fusspunkt(e) (Bremsscheibenseite) |
| 4.2 | zweite Fusspunkt(e) (Bremsscheibenseite) |
| ß | Einführungswinkel (Bremsscheibenseite) |
| ß' | Winkel (Bremsscheibenseite) |
| 31 | Nicht-Bremsscheibenseite |
| 200 | zweite Speichengruppe (Nicht-Bremsscheibenseite) |
| 2.1' | erster Speichenabschnitt (Nicht-Bremsscheibenseite) |
| 2.2' | zweiter Speichenabschnitt (Nicht-Bremsscheibenseite) |
| 4.1' | Fusspunkt(e) (Nicht-Bremsscheibenseite) |
| 4.2' | Fusspunkt(e) (Nicht-Bremsscheibenseite) |
| $\alpha$ | Einführungswinkel (Nicht-Bremsscheibenseite) |
| $\alpha$' | Winkel (Nicht-Bremsscheibenseite) |
| 10 | Nabe |
| 3 | einem Zentrum |
| 8 | Kreuzungspunkt |
| 2.3.1, 2.3.2, 2.1.1, 2.1.2 | Gewebelagen |

| 9 | Negativform |
|---|---|
| 9.1 | Erster Teil Negativform |
| 9.2 | Zweiter Teil Negativform |
| 15 | Form |
| 13, 14 | Stempelformen |
| 16, 160 | Felge |
| 17, 170 | Felgenkörper |
| 18 | Felgenbett |
| 21 | erste Speichengruppe |
| 19 | Speichen |
| 22 | zweite Speichengruppe |
| 29 | erste Speichenabschnitte (erste Speichengruppe) |
| 32 | zweite Speichenabschnitte 32 (erste Speichengruppe) |
| 23 | erste Fusspunkte (erste Speichengruppe) |
| 26 | zweite Fusspunkte (zweite Speichengruppe) |
| 28 | Nicht-Bremsscheibenseite |
| 24 | Bremsscheibenseite |
| 25 | Zentrum |
| 34 | Erste Speichenabschnitte (zweite Speichengruppe) |
| 36 | Zweiten Speichenabschnitte (zweite Speichengruppe) |
| 33 | Erste Fusspunkte (zweite Speichengruppe) |
| 37 | Zweite Fusspunkte (zweite Speichengruppe) |
| X | Vertikale Symmetrieebene des Fahrradlaufrads |
| D | Drehachse |
| 38, 38' | Zentrumscheiben |
| 39, 39' | Speicheneinlaufbereich |
| 160 A, 160 B | Felgenquerschnitt |

**Patentansprüche**

1. Fahrradlaufrad aus einem Faserverbundwerkstoff, umfassend eine Felge (1, 16), eine Mehrzahl von Speichen (2, 19) und ein Zentrum (3, 25), wobei die Speichen (2, 19) je einen ersten und zweiten Speichenabschnitt (2.1; 2.2, 2.1', 2.2', 29, 32, 34, 36) aufweisen, der je zwischen der Felge (1, 16) und dem Zentrum (3, 25) verläuft, wobei der erste und zweite Speichenabschnitt (2.1; 2.2, 2.1', 2.2', 29, 32, 34, 36) in einem laminierten Zustand eine geschwungene Form aufweist und in einem vorgespannten Zustand die beiden Speichenabschnitte (2.1; 2.2, 2.1', 2.2', 29, 32, 34, 36) im wesentlichen gerade verlaufen.

2. Fahrradlaufrad nach Anspruch 1, **dadurch gekennzeichnet, dass** der erste und der zweite Speichenabschnitt (2.1; 2.2, 2.1', 2.2', 29, 32, 34, 36) im laminierten Zustand eine S-Form aufweist.

3. Fahrradlaufrad nach Anspruch 2, **dadurch gekennzeichnet, dass** die S-Form eine symmetrische oder eine asymmetrische Form aufweist.

4. Fahrradlaufrad nach Anspruch 1 bis 3, **dadurch gekennzeichnet, dass** die Speichen (2) eine erste und eine zweite Speichengruppe (20, 200) bilden, wobei die ersten Speichenabschnitte (2.1') der Speichen (2) der zweiten Speichengruppe (200) zwischen ersten Fusspunkten (4.1', 4.2') angeordnet an der Felge (1) an einer Nicht-Bremsschreibenseite und der Nicht-Bremsscheibenseite (31) des Zentrums (3) verlaufen und die zweiten Speichenabschnitte (2.2) zwischen der Nicht-Bremsscheibenseite (31) des Zentrums (3) und zweiten Fusspunkten (4.1', 4.2') angeordnet an der Felge (1) an der Nicht-Bremsscheibenseite und die ersten Speichenabschnitte (2.1, 2.1') der Speichen (2) der ersten Speichengruppe (20) zwischen ersten Fusspunkten (4.1, 4.2) angeordnet an der Felge (1) an der Bremsscheibenseite und der Bremsscheibenseite (30) des Zentrums (3) verlaufen und die zweiten Speichenabschnitte (2.2) zwischen der Bremsscheibenseite (30) des Zentrums und zweiten Fusspunkten (4.2) angeordnet an der Felge (1) an der Bremsscheibenseite.

5. Fahrradlaufrad nach Anspruch 1 bis 3, **dadurch gekennzeichnet, dass** die Speichen (19) eine erste und eine zweite Speichengruppe (21, 22) bilden, wobei die ersten Speichenabschnitte (29) der Speichen (19) der ersten Speichengruppe (21) zwischen ersten Fusspunkten (23) angeordnet an der Felge (16) an einer Nicht-Bremsschreibenseite (28) und einer Bremsscheibenseite (24) des Zentrums (25) verlaufen und die zweiten Speichenabschnitte (32) zwischen der Bremsscheibenseite (24) des Zentrums (25) und zweiten Fusspunkten (26) angeordnet an der Felge (16) an der Nicht-Bremsscheibenseite und die ersten Speichenabschnitte (34) der Speichen (19) der zweiten Speichengruppe (22) zwischen ersten Fusspunkten (33) angeordnet an der Felge (16) an der Bremsscheibenseite und der Nicht-Bremsscheibenseite (28) des Zentrums (25) verlaufen und die zweiten Speichenabschnitte (36) zwischen der Nicht-Bremsscheibenseite (28) des Zentrums und zweiten Fusspunkten (37) angeordnet an der Felge an der Bremsscheibenseite.

6. Fahrradlaufrad nach Anspruch 4 oder 5, **dadurch gekennzeichnet, dass** die ersten und zweiten Fusspunkte (4.1, 4.2, 32, 29) der ersten Speichengruppe (20, 21) und/oder die ersten und zweiten Fusspunkte (4.1', 4.2', 34, 36) der zweiten Speichengruppe (200,22) beabstandet zu einem Scheitel (S) der Felge (1, 160) angeordnet sind.

7. Fahrradlaufrad nach einem der vorangegangenen Ansprüche, **dadurch gekennzeichnet, dass** die Felge (1, 16) bezüglich einer Drehachse (D) des Fahrradlaufrads nicht-rotationssymmetrisch ausgestalten ist.

8. Fahrradlaufrad nach Anspruch 7, **dadurch gekennzeichnet, dass** die Felge (1, 16), im Bereich der ersten und der zweiten Fusspunkte (23, 26) der Speichen (19) der ersten Speichengruppe (20, 21) einen anderen Felgenquerschnitt aufweist als, im Bereich der ersten und zweiten Fusspunkte (33, 37) der Speichen (19) der zweiten Speichengruppe (22, 200).

9. Fahrradlaufrad nach einem der vorangegangenen Ansprüche 4 bis 8, **dadurch gekennzeichnet, dass** die Speichen der ersten Speichengruppe (20, 21) zu einer Symmetrieebene (X) des Fahrradlaufrads einen Speichenwinkel Delta bilden und die Speichen der zweiten Speichengruppe (22, 200) einen Speichenwinkel Epsilon, wobei die beiden Speichenwinkel Delta und Epsilon im wesentlich gleich gross sind.

10. Fahrradlaufrad nach einem der vorangegangenen Ansprüche 4 bis 9, **dadurch gekennzeichnet, dass** das Zentrum (3, 25) durch zwei gegenüberliegende Zentrumsscheiben (39, 39'), eine auf der Bremsscheibenseite (30, 24) und eine auf der Nicht-Bremsscheibenseite (31, 28) gebildet wird, wobei die Zentrumsscheiben (39, 39') um einen Winkel gamma ($\gamma$) geneigt zu einer Achse w ausbildet sind, wobei der Winkel gamma ($\gamma$) einen Wert zwischen 6 bis 8° aufweist.

11. Fahrradlaufrad nach einem der vorangegangenen Ansprüche, **dadurch gekennzeichnet, dass** der erste und der zweite Speichenabschnitt (2.1, 2.2, 2.1', 2.2', 29, 34) je einen Kreuzungspunkt (8) mit einem weiteren ersten und zweiten Speichenabschnitt (2.1, 2.2, 2.1', 2.2', 29, 34) bilden, wobei die Kreuzungspunkte (8) durch einzelne Lagen (2.3.1, 2.3.2, 2.1.1.; 2.1.2) der Speichenabschnitte (2.1, 2.3) gebildet werden, vorzugsweise aus mindestens vier Lagen.

12. Fahrradlaufrad nach Anspruch 11, **dadurch gekennzeichnet, dass** im Kreuzungspunkt (8) die Lagen (2.1.1, 2.1.2) des ersten Speichenabschnitts (2.1, 2.1', 21, 34) abwechselnd mit den Lagen (2.3.1, 2.3.2) des weiteren ersten Speichenabschnitts (2.1, 2.1', 21, 34) laminiert sind, sodass am Kreuzungspunkt (8) eine Verwebung entsteht.

13. Fahrradlaufrad nach einem der Ansprüche 1 bis 12, **dadurch gekennzeichnet, dass** die Felge (16, 160) einen asymmetrischen Felgenkörper (17) aufweist, vorzugsweise dieser Felgenkörper (17) als ein Hohlkörper ausgebildet ist.

14. Fahrradlaufrad nach einem der vorangegangenen Ansprüche 1 bis 12, **dadurch gekennzeichnet, dass** die Felge (1) einen symmetrischen Felgenkörper (1') aufweist, vorzugsweise ist dieser Felgenkörper (1') als ein Hohlkörper ausgebildet.

15. Fahrradlaufrad nach Anspruch 14, **dadurch gekennzeichnet, dass** ein Abstand (X1) der ersten und zweiten Fusspunkte (4.1, 4.2) der ersten Speichengruppe (20) zum Scheitel (S) der Felge (1) grösser ist ein Abstand (X2) der ersten und zweiten Fusspunkte (4.1', 4.2') der zweiten Speichengruppe (200).

16. Fahrradlaufrad nach Anspruch 14, **dadurch gekennzeichnet, dass** ein Abstand (X1) der ersten und zweiten Fusspunkte (2.1, 2.2) der ersten Speichengruppe (20) zum Scheitel (S) der Felge (1) kleiner ist der Abstand (X2) der ersten und zweiten Fusspunkte (4.1', 4.2') der zweiten Speichengruppe (200).

17. Fahrradlaufrad nach einem der vorangegangenen Ansprüche 14 bis 16, **dadurch gekennzeichnet, dass** der erste und zweite Speichenabschnitt (2.1, 2.2) der Speichen (2) der ersten Speichengruppe (20) im vorgespannten Zustand zu einer Aussengeometrie der Felge (1), gemessen an einer Tangente angelegt an die Aussengeometrie der Felge im ersten bzw. zweiten Fusspunkt (4.1, 4.2) einen Einführungswinkel beta (ß) und der erste und zweite Speichenabschnitt (2.1', 2.2') der Speichen (2) der zweiten Speichengruppe (200) im vorgespannten Zustand, gemessen an einer Tangente angelegt an die Aussengeometrie der Felge (1) im ersten bzw. zweiten Fusspunkt (4.1', 4.2') einen Einführungswinkel alpha ($\alpha$) einnehmen, wobei alpha ($\alpha$) grösser 90° und beta (ß) grösser als alpha ($\alpha$) ist, vorzugsweise beta (ß) einen Wert zwischen 120° und 180° aufweist.

18. Fahrradlaufrad nach einem der Ansprüche 14 bis 17, **gekennzeichnet durch** einen Winkel alpha-strich ($\alpha$') gemessen zwischen einer parallelen Ebene zur Symmetrieebene der Felge (1), welche durch die zweiten Fusspunkte (4.1') verläuft und dem ersten Speichenabschnitt (2.1'), im vorgespannten Zustand auf der Nicht-Bremsscheibenseite (31) und durch einen Winkel ß' (beta-strich) gemessen zwischen einer parallelen Ebene zur Symmetrieebene der Felge (1), welche durch die ersten Fusspunkte (4.1) verläuft und dem ersten Speichenabschnitt (2.1), im vorgespannten Zustand auf der Bremsscheibenseite (30), wobei sich die Winkel alpha-strich ($\alpha$') und beta-strich (ß') um einem Wert kleiner oder gleich 2° unterscheiden, und alpha-strich ($\alpha$') vorzugsweise grösser ist als beta-strich (ß').

19. Verfahren zur Herstellung eines Fahrradlaufrads aus Faserverbundwerkstoff in zwei Grundschritten, wobei in einem ersten Grundschritt das Laminieren der Felge (1, 16, 160), der Speichen (2, 19), und des Zentrums (3, 25), einstückig in einem Schritt erfolgt, wobei die Speichen (2, 19) einen ersten und einen zweiten Speichenabschnitt (2.1; 2.2, 2.1', 2.2', 29, 32, 34, 36) aufweisen, diese Speichenabschnitte (2.1; 2.2, 2.1', 2.2', 29, 32, 34, 36) in einer geschwungenen Form, vorzugsweise in einer S-Form, durchgängig laminiert werden, gefolgt vom Aushärten und in einem zweiten Grundschritt das Vorspannen der Speichen (2, 19) erfolgt, sodass im vorgespannten Zustand der erste und zweite Speichenabschnitt (2.1; 2.2, 2.1', 2.2', 29, 32, 34, 36) einen im Wesentliche geraden Verlauf zeigen und das Einsetzen der Nabe (10) ausgeführt wird.

20. Verfahren nach Anspruch 19, **dadurch gekennzeichnet, dass** nach Abschluss des ersten Grundschritts umfassend das Laminieren und das Aushärten ein Fahrradlaufrad erhalten wird, welches die Felge (1, 16, 160), das Zentrum (25, 3) mit einer ersten und einer zweiten Zentrumsscheibe (38, 38'), sowie die noch nicht vorgespannten Speichen (2, 19) verbunden mit der Felge (1, 16, 160) und den Zentrumsscheiben (38, 38') umfasst und nach Abschluss des zweiten Grundschritts ein Fahrradlaufrad mit vorgespannten Speichen erhalten wird.

## Claims

1. A bicycle wheel made of a fiber composite material, comprising a rim (1, 16), a plurality of spokes (2, 19) and a center (3, 25), wherein the spokes (2, 19) each have a first spoke section and a second spoke section (2.1; 2.2, 2.1', 2.2', 29, 32, 34, 36) extending between the rim (1, 16) and the center (3, 25) in each case, **characterized in that** the first spoke section and the second spoke section (2.1; 2.2, 2.1', 2.2', 29, 32, 34, 36) each have a curved shape in a laminated state and each extend substantially straight in a pretensioned state of the two spoke sections (2.1; 2.2, 2.1', 2.2', 29, 32, 34, 36).

2. The bicycle wheel according to claim 1, **characterized in that** the first and second spoke sections (2.1; 2.2, 2.1', 2.2', 29, 32, 34, 36) have an S-shape in a laminated state.

3. The bicycle wheel according to claim 2, **characterized in that** the S-shape has a symmetrical or asymmetrical shape.

4. The bicycle wheel according to claim 1 to 3, **characterized in that** the spokes (2) form a first spoke group and a second spoke group (20, 200), wherein the first spoke sections (2.1') of the spokes (2) of the second spoke group (200) extend between first base points (4.1', 4.2') arranged on the rim (1) on a non-brake disc side and the non-brake disc side (31) of the center (3), and the second spoke sections (2.2) extend between the non-brake disc side (31) of the center (3) and second base points (4.1', 4.2') arranged on the rim (1) on the non-brake disc side, and the first spoke sections (2.1, 2.1') of the spokes (2) of the first spoke group (20) extend between first base points (4.1, 4.2) arranged on the rim (1) on the brake disc side and the brake disc side (30) of the center (3), and the second spoke sections (2.2) extend between the brake disc side (30) of the center and second base points (4.2) arranged on the rim (1) on the brake disc side.

5. The bicycle wheel according to claim 1 to 3, **characterized in that** the spokes (19) form a first spoke group and a second spoke group (21, 22), wherein the first spoke sections (29) of the spokes (19) of the first spoke group (21) extend between first base points (23) arranged on the rim (16) on a non-brake disc side (28) and a brake disc side (24) of the center (25), and the second spoke sections (32) extend between the brake disc side (24) of the center (25) and second base points (26) arranged on the rim (16) on the non-brake disc side, and the first spoke sections (34) of the spokes (19) of the second spoke group (22) extend between first base points (33) arranged on the rim (16) on the brake disc side and the non-brake disc side (28) of the center (25), and the second spoke sections (36) extend between the non-brake disc side (28) of the center and second base points (37) arranged on the rim on the brake disc side.

6. The bicycle wheel according to claim 4 or 5, **characterized in that** the first and second base points (4.1, 4.2, 32, 29) of the first spoke group (20, 21) and/or the first and second base points (4.1', 4.2', 34, 36) of the second spoke group (200, 22) are arranged at a distance to an apex (S) of the rim (1, 160).

7. The bicycle wheel according to any of the preceding claims, **characterized in that** the rim (1, 16) is not configured to be rotationally symmetrical with respect to an axis of rotation (D) of the bicycle wheel.

8. The bicycle wheel according to claim 7, **characterized in that** the rim (1, 16) has a different rim cross-section in the region of the first and second base points (23, 26) of the spokes (19) of the first spoke group (20, 21) than in the region of the first and second base points (33, 27) of the spokes (19) of the second spoke group (22, 200).

9. The bicycle wheel according to any one of the preceding claims 4 to 8, **characterized in that** the spokes of the first spoke group (20, 21) form a spoke angle delta with a plane of symmetry (X) of the bicycle wheel, and the spokes of the second spoke group (22, 200) form a spoke angle epsilon, wherein the two spoke angles delta and epsilon are substantially equally large.

10. The bicycle wheel according to any one of the preceding claims 4 to 9, **characterized in that** the center (3, 25) has two opposed center discs (39, 39'), one on the brake disc side (30, 24) and one on the non-brake disc side (31, 28), wherein the center discs (39, 39') are inclined by an angle gamma ($\gamma$) to an axis w, wherein the angle gamma ($\gamma$) has a value between 6 and 8°.

11. The bicycle wheel according to any one of the preceding claims, **characterized in that** the first and the second spoke sections (2.1; 2.2, 2.1', 2.2', 29, 34) each form a crossing point (8) with a further first and second spoke section (2.1; 2.2, 2.1', 2.2', 29, 34), wherein the crossing points (8) are formed from individual layers (2.3.1, 2.3.2, 2.1.1.; 2.1.2) of the spoke sections (2.1, 2.3), preferably from at least four layers.

12. The bicycle wheel according to claim 11, **characterized in that** at the crossing point (8), the layers (2.1.1, 2.1.2) of the first spoke section (2.1, 2.1', 21, 34) arc laminated alternatingly with the layers (2.3.1, 2.3.2) of the further first spoke section (2.1, 2.1', 21, 34), so that an interweaving results at the crossing point (8).

13. The bicycle wheel according to any one of claims 1 to 12, **characterized in that** the rim (16, 160) has an asymmetrical rim body (7), said rim body (17) preferably being configured as a hollow body.

14. The bicycle wheel according to any one of the preceding claims 1 to 12, **characterized in that** the rim (1) has a symmetrical rim body (1'), said rim body (1') preferably being configured as a hollow body.

15. The bicycle wheel according to claim 14, **characterized in that** a distance (X1) of the first and second base points (4.1, 4.2) of the first spoke group (20) to the apex (S) of the rim (1) is greater than a distance (X2) of the first and second base points (4.1', 4.2') of the second spoke group (200).

16. The bicycle wheel according to claim 14, **characterized in that** a distance (X1) of the first and second base points (2.1, 2.2) of the first spoke group (20) to the apex (S) of the rim (1) is smaller than the distance (X2) of the first and second base points (4.1', 4.2') of the second spoke group (200).

17. The bicycle wheel according to any one of the preceding claims 14 to 16, **characterized in that** the first and second spoke sections (2.1, 2.2) of the spokes (2) of the first spoke group (20) in the pretensioned state enclose an insertion angle beta ($\beta$) with an outer geometry of the rim (1) measured at a tangent line applied to the outer geometry of the rim at the first and/or second base point (4.1, 4.2), and the first and second spoke sections (2.1', 2.2') of the spokes (2) of the second spoke group (200) in a pretensioned state enclose an insertion angle alpha ($\alpha$) measured at a tangent line applied to the outer geometry of the rim (1) at the first and/or second base point (4.1', 4.2'), wherein alpha (α) is greater than 90° and beta (β) is greater than alpha (α), beta (β) preferably having a value between 120° and 180°.

18. The bicycle wheel according to any one of claims 14 to 17, **characterized by** an angle alpha-prime (α') measured between a parallel plane to the plane of symmetry of the rim (1), which extends through the second base points (4.1'), and the first spoke section (2.1'), in the pretensioned state on the non-brake disc side (31), and by an angle β' (beta-prime) measured between a parallel plane to the plane of symmetry of the rim (1), which extends through the first base points (4.1), and the first spoke section (2.1), in the pretensioned state on the brake disc side (30), wherein the angles alpha-prime (α') and beta-prime (β') differ by a value less than or equal to 2°, and alpha-prime (α') is preferably larger than beta-prime (β').

19. A method for manufacturing a bicycle wheel made of a fiber composite material in two basic steps, wherein in a first basic step, the laminating of the rim (1, 16, 160), the spokes (2, 19) and the center (3, 25) is effected in single-piece manner in one step, wherein the spokes (2, 19) have a first spoke section and a second spoke section (2.1; 2.2, 2.1', 2.2', 29, 32, 34, 36), said spoke sections (2.1; 2.2, 2.1', 2.2', 29, 32, 34, 36) being continuously laminated in a curved shape, preferably in an S-shape, followed by curing, and in a second basic step the pretensioning of the spokes (2, 19) is effected, so that in the pretensioned state the first and second spoke sections (2.1; 2.2, 2.1', 2.2', 29, 32, 34, 36) show a substantially straight course and the insertion of the hub (10) is executed.

20. The method according to claim 19, **characterized in that** after completion of the first basic step comprising the laminating and the curing, a bicycle wheel is obtained which comprises the rim (1, 16, 160), the center (25, 3) with a first and a second center disc (38, 38') and the not yet pretensioned spokes (2, 19) connected to the rim (1, 16, 160) and the center discs (38, 38'), and after completion of the second basic step, a bicycle wheel with pretensioned spokes is obtained.

**Revendications**

1. Roue de bicyclette en un matériau composite de fibres, comprenant une jante (1, 16), une pluralité de rayons (2, 19) et un centre (3, 25), les rayons (2, 19) comportant respectivement une première et deuxième section de rayon (2.1, 2.2, 2.1', 2.2', 29, 32, 34, 36) disposée respectivement entre la jante (1, 16) et le centre (3, 25), **caractérisée en ce que** la première et deuxième section de rayon (2.1, 2.2, 2.1', 2.2', 29, 32, 34, 36) a, à un état laminé, une forme galbée, et **en ce que**, à un état précontraint, les deux sections de rayon (2.1, 2.2, 2.1', 2.2', 29, 32, 34, 36) sont essentiellement rectilignes.

2. Roue de bicyclette selon la revendication 1, **caractérisée en ce que** la première et la deuxième section de rayon (2.1, 2.2, 2.1', 2.2', 29, 32, 34, 36) a, à un état laminé, une forme en S.

3. Roue de bicyclette selon la revendication 2, **caractérisée en ce que** la forme en S a une forme symétrique ou asymétrique.

4. Roue de bicyclette selon la revendication de 1 à 3, **caractérisée en ce que** les rayons (2) constituent un premier et un deuxième groupe de rayons (20, 200), cependant que les premières sections de rayon (2.1') des rayons (2) du deuxième groupe de rayons (200) sont disposées entre des premiers points de base (4.1', 4.2'), agencés à la jante (1) d'un côté non disque de freiN, et le côté non disque de frein (31) du centre (3), et les deuxièmes sections de rayon (2.2) entre le côté non disque de frein (31) du centre (3) et des deuxièmes points de base (4.1', 4.2'), agencés à la jante (1) du côté non disque de frein, et que les premières sections de rayon (2.1, 2.1') des rayons (2) du premier groupe de rayons (20) sont disposées entre des premiers points de base (4.1, 4.2), agencés à la jante (1) du côté disque de frein, et le côté disque de frein (30) du centre (3), et les deuxièmes sections de rayon (2.2) entre le côté disque de frein (30) du centre et des deuxièmes points de base (4.2), agencés à la jante (1) du côté disque de frein.

5. Roue de bicyclette selon la revendication de 1 à 3, **caractérisée en ce que** les rayons (19) constituent un premier et un deuxième groupe de rayons (21, 22), cependant que les premières sections de rayon (29) des rayons (19) du premier groupe de rayons (21) sont disposées entre des premiers points de base (23), agencés à la jante (16) d'un côté non disque de frein (28), et un côté disque de frein (24) du centre (25), et les deuxièmes sections de rayon (32) entre le côté disque de frein (24) du centre (25) et des deuxièmes points de base (26), agencés à la jante (16) du côté non disque de frein, et que les premières sections de rayon (34) des rayons (19) du deuxième groupe de rayons (22) sont disposées entre des premiers points de base (33), agencés à la jante (16) du côté disque de frein , et le côté non disque de frein (28) du centre (25), et les deuxièmes sections de rayon (36) entre le côté non disque de frein (28) du centre et des deuxièmes points de base (37), agencés à la jante du côté disque de frein.

6. Roue de bicyclette selon la revendication 4 ou 5, **caractérisée en ce que** les premiers et deuxièmes points de base (4.1, 4.2, 32, 29) du premier groupe de rayons (20, 21) et/ou les premiers et deuxièmes points de base (4.1', 4.2', 34, 36) du deuxième groupe de rayons (200, 22) sont agencés de manière espacée par rapport à un sommet (S) de la jante (1, 160).

7. Roue de bicyclette selon une des revendications précédentes, **caractérisée en ce que** la jante (1, 16) est réalisée sans symétrie de révolution par rapport à l'axe de rotation (D) de la roue de bicyclette.

8. Roue de bicyclette la revendication 7, **caractérisée en ce que** la jante (1, 16) présente dans la zone des premiers et des deuxièmes points de base (23, 26) des rayons (19) du premier groupe de rayons (20, 21) une autre coupe transversale de jante que dans la zone des premiers et deuxièmes points de base (33, 37) des rayons (19) du deuxième groupe de rayons (22, 200).

9. Roue de bicyclette selon une des revendications précédentes de 4 à 8, **caractérisée en ce que** les rayons du premier groupe de rayons (20, 21) forment relativement à un plan de symétrie (X) de la roue de bicyclette un angle de rayon Delta, et les rayons du deuxième groupe de rayons (22, 200) un angle de rayon Epsilon, cependant que les deux angles de rayon Delta et Epsilon sont essentiellement de taille égale.

10. Roue de bicyclette selon une des revendications précédentes de 4 à 9, **caractérisée en ce que** le centre (3, 25) est constitué par deux disques du centre (39, 39') se faisant face, un du côté disque de frein (30, 24) et un du côté non disque de frein (31, 28), cependant que les disques du centre (39, 39') sont réalisés de façon inclinés d'un angle gamma ($\gamma$) par rapport à un axe w, cependant que l'angle gamma ($\gamma$) a une valeur comprise entre 6 et 8°.

11. Roue de bicyclette selon une des revendications précédentes, **caractérisée en ce que** la première et la deuxième section de rayon (2.1, 2.2, 2.1', 2.2',29, 34) constituent chacune un point de croisement (8) avec une autre première et deuxième section de rayon (2.1, 2.2, 2.1', 2.2',29, 34), cependant que les points de croisement (8) sont constitués par des strates (2.3.1, 2.3.2, 2.1.1 ; 2.1.2) individuelles des sections de rayon (2.1, 2.3), de préférence par au moins quatre strates.

12. Roue de bicyclette selon la revendication 11, **caractérisée en ce que**, dans le point de croisement (8), les strates (2.1.1, 2.1.2) de la première section de rayon (2.1, 2.1', 21, 34) sont laminées en alternance avec les strates (2.3.1, 2.3.2) de l'autre première section de rayon (2.1, 2.1', 21, 34), de telle sorte que, au point de croisement (8), un entrelacement est engendré.

13. Roue de bicyclette selon une des revendications de 1 à 12, **caractérisée en ce que** la jante (16, 160) présente un corps de jante (17) asymétrique, de préférence que ce corps de jante (17) est réalisé sous forme de corps creux.

14. Roue de bicyclette selon une des revendications précédentes de 1 à 12, **caractérisée en ce que** la jante (1) présente un corps de jante (1') symétrique, de préférence que ce corps de jante (1') est réalisé sous forme de corps creux.

15. Roue de bicyclette selon la revendication 14, **caractérisé en ce qu'**un espacement (X1) des premiers et deuxièmes points de base (4.1, 4.2) du premier groupe de rayons (20) par rapport à un sommet (S) de la jante (1) est supérieur à un espacement (X2) des premiers et deuxièmes points de base (4.1', 4.2') du deuxième groupe de rayons (200).

16. Roue de bicyclette selon la revendication 14, **caractérisé en ce qu'**un espacement (X1) des premiers et deuxièmes points de base (2.1, 2.2) du premier groupe de rayons (20) par rapport à un sommet (S) de la jante (1) est inférieur à l'espacement (X2) des premiers et deuxièmes points de base (4.1', 4.2') du deuxième groupe de rayons (200).

17. Roue de bicyclette selon une des revendications précédentes de 14 à 16, **caractérisée en ce que** la première et deuxième section de rayon (2.1, 2.2) des rayons (2) du premier groupe de rayons (20) adopte, à l'état précontraint, par rapport à une géométrie extérieure de la jante (1), mesuré à une tangente appliquée à la géométrie extérieure de la jante, au premier ou deuxième point de base (4.1, 4.2), un angle d'insertion bêta ($\beta$), et la première et deuxième section de rayon (2.1', 2.2') des rayons (2) du deuxième groupe de rayons (200) adopte, à l'état précontraint, mesuré à une tangente appliquée à la géométrie extérieure de la jante (1), au premier ou deuxième point de base (4.1',

4.2'), un angle d'insertion alpha (α), cependant que alpha (α) est supérieur à 90° et que bêta (β) est supérieur à alpha (α), que de préférence bêta (β) présente une valeur comprise entre 120° et 180°.

**18.** Roue de bicyclette selon une des revendications précédentes de 14 à 17, **caractérisée par** un angle alpha prime (α☐), mesuré entre un plan parallèle au plan de symétrie de la jante (1), lequel est défini par les deuxièmes points de base (4.1'), et la première section de rayon (2.1'), à l'état précontraint du côté non disque de frein (31), et par un angle β☐ (bêta prime), mesuré entre un plan parallèle au plan de symétrie de la jante (1), lequel est défini par les premiers points de base (4.1), et la première section de rayon (2.1), à l'état précontraint du côté disque de frein (30), cependant que les angles alpha prime (α☐) et bêta prime (β☐) se différencient d'une valeur inférieure ou égale à 2° et que alpha prime (α☐) est de préférence supérieur à bêta prime (β☐).

**19.** Procédé de fabrication d'une roue de bicyclette en matériau composite de fibres, en deux étapes de base, cependant que, lors d'une première étape de base, le laminage de la jante (1, 16, 160), des rayons (2 , 19) et du centre (3, 25) est effectué en un seul tenant, cependant que les rayons (2, 19) comportent une première et deuxième section de rayon (2.1, 2.2, 2.1', 2.2', 29, 32, 34, 36), que ces sections de rayon (2.1, 2.2, 2.1', 2.2', 29, 32, 34, 36) sont laminées de manière ininterrompue en une forme galbée, de préférence en une forme en S, à la suite de quoi le durcissement a lieu, et que, lors d'une deuxième étape de base, la précontrainte des rayons (2, 19) est effectuée, de telle sorte que, à l'état précontraint, la premières et deuxième section de rayon (2.1, 2.2, 2.1', 2.2', 29, 32, 34, 36) présentent un tracé essentiellement rectiligne et l'insertion du moyeu (10) est exécutée.

**20.** Procédé selon la revendication 19, **caractérisé en ce que**, après l'achèvement de la première étape de base comprenant le laminage et le durcissement, une roue de bicyclette est obtenue, laquelle comprend la jante (1, 16, 160), le centre (25, 3) ayant un premier et un deuxième disque du centre (38, 38'), ainsi que les rayons (2, 19) non encore précontraints, reliés à la jante (1, 16, 160) et aux disque du centre (38, 38'), et que, après l'achèvement de la deuxième étape de base, une roue de bicyclette aux rayons précontraints est obtenue.

Fig. 1

EP 3 061 593 B1

# Fig. 2

EP 3 061 593 B1

# Fig. 3

EP 3 061 593 B1

(a)          (b)          (c)

Fig. 4

EP 3 061 593 B1

Fig. 5

Fig. 6

Fig. 7

Fig. 8

EP 3 061 593 B1

Fig. 9

# Fig. 10

EP 3 061 593 B1

# Fig. 11

# Fig. 12(a)

# Fig. 12(b)

# Fig. 13(a)

# Fig. 13(b)

# Fig. 14

161

37

B

A

26

S'

X

160B

S

X

160A

x

z

y

# Fig. 14 (b)

# Fig. 14 (c)

# Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2030765 A2
- US 20140292061 A1
- EP 1985465 A1

- EP 1795370 A1
- DE 9201179
- DE 102008007722 A1